# EUROPÄISCHE PATENTSCHRIFT

(11) **EP 3 555 996 B1**
(45) Veröffentlichungstag und Bekanntmachung des Hinweises auf die Patenterteilung: **01.11.2023**
(21) Anmeldenummer: 17818045.1
(22) Anmeldetag: 11.12.2017
(51) Int. Cl.: H02K 5/18, H02K 9/04, H02K 9/06

(54) **KÜHLVORRICHTUNG EINES ELEKTROMOTORS SOWIE ELEKTROMOTOR MIT KÜHLVORRICHTUNG**
COOLING DEVICE FOR AN ELECTRIC MOTOR AND ELECTRIC MOTOR WITH COOLING DEVICE
DISPOSITIF DE REFROIDISSEMENT D'UN MOTEUR ÉLECTRIQUE AINSI QUE MOTEUR ÉLECTRIQUE DOTÉ D'UN DISPOSITIF DE REFROIDISSEMENT

(30) Priorität: 19.12.2016 DE 102016015535
(43) Veröffentlichungstag der Anmeldung: 23.10.2019
(73) Patentinhaber: Ziehl-Abegg SE, 74653 Künzelsau (DE)
(72) Erfinder: LÖRCHER, Frieder, 74542 Braunsbach (DE); ERNEMANN, Lothar, 74081 Heilbronn (DE)
(74) Vertreter: Kohl, Karl-Heinz
(86) Internationale Anmeldenummer: PCT/EP2017/001415
(87) Internationale Veröffentlichungsnummer: WO 2018/114037

(56) Entgegenhaltungen:
- EP-A1- 2 429 067
- WO-A2-2013/136021
- CN-U- 204 391 932
- DE-B- 1 005 172
- DE-U1-202015 105 804

## Beschreibung

Die Erfindung betrifft eine Kühlvorrichtung eines Elektromotors nach dem Oberbegriff des Anspruches 1 sowie einen Elektromotor nach Anspruch 9.

Elektromotoren haben einen Stator und einen Rotor. Bei einem Außenläufermotor umgibt der Rotor den Stator. Im Stator und/oder im Rotor befinden sich Bauteile, die im Betrieb des Elektromotors Wärme erzeugen. Um sie abzuführen, haben der Stator und der Rotor Kühlflansche in Form eines Statorkühlflansches bzw. eines Rotorkühlflansches, auf denen jeweils Kühlrippen angeordnet sein können. Statorkühlflansch und Rotorkühlflansch zusammengenommen werden als Kühlvorrichtung bezeichnet. Die Kühlflansche liegen mit geringem Abstand einander gegenüber. Wenn im Betrieb des Elektromotors der Rotor und damit der Rotorkühlflansch um ihre Achse drehen, wird ein Kühlluftstrom erzeugt, der zwischen den beiden Kühlflanschen sowie den darauf befindlichen Kühlrippen strömt und die von der Kühlvorrichtung aufgenommene Wärme abführt. Die Kühlrippen sind über den Umfang verteilt angeordnet und gerade ausgebildet. In der Regel verlaufen die Kühlrippen in radialer Richtung, können aber auch schräg zur Radialrichtung angeordnet sein.

Bei einer Kühlvorrichtung können Kühlflansche mit Kühlrippen insbesondere zwei Funktionen haben. Einerseits kann ein Kühlflansch direkt zur Abgabe von Wärme dienen (wärmeabgebender Kühlflansch), die an anderer Stelle in den betreffenden wärmeabgebenden Kühlflansch eingeleitet wird. Andererseits kann ein Kühlflansch eine aerodynamische Funktion innehaben. Ein Kühlflansch mit aerodynamischer Funktion dient im Betrieb des Motors dazu, die Luftströmungsverhältnisse im Kühlsystem, vorteilhaft in Wechselwirkung mit dem gegenüberliegenden Kühlflansch, dergestalt zu beeinflussen, dass die Wärmeabgabe des Kühlsystems entscheidend vorteilhaft beeinflusst wird. Ein Kühlflansch kann sowohl wärmeabgebende Funktion als auch aerodynamische Funktion gleichzeitig haben. Andererseits kann ein Kühlflansch auch nur aerodynamische oder nur wärmeabgebende Funktion innehaben.

Das Kühlsystem kann bei einem vorgegebenen maximalen Bauraum nur eine begrenzte Menge an Wärme abgeben. Zudem führen die Kühlrippen bei laufendem Motor zu einer erhöhten Geräuscherzeugung, einem sogenannten Drehton, der häufig als störend empfunden wird. Insbesondere wenn sowohl auf dem Statorkühlflansch als auch auf dem Rotorkühlflansch jeweils gegenüberliegende Kühlrippen in ihrem Verlauf gerade sind und keinen oder nur sehr geringen Winkel zueinander aufweisen, wie beispielsweise wenn alle Kühlrippen rein radialen Verlauf aufweisen, streichen bei Rotationsbewegung des Rotors gegenüberliegende Kühlrippen des Statorkühlflansches und Rotorkühlflansches über eine große radiale Erstreckung simultan aneinander vorbei. Dies führt zum Auftreten von erhöhten Drehtönen.

Relevanter Stand der Technik ist DE 20 2015 105 804 U1, CN 204391932 U und EP 2 429 067 A1.

Der Erfindung liegt die Aufgabe zugrunde, die gattungsgemäße Kühlvorrichtung und den Elektromotor so auszubilden, dass die Kühlleistung erhöht wird, ohne mehr Bauraum zu beanspruchen, und die Lärmentwicklung reduziert wird.

Diese Aufgabe wird bei der gattungsgemäßen Kühlvorrichtung erfindungsgemäß mit den kennzeichnenden Merkmalen des Anspruches 1 und beim Elektromotor mit den Merkmalen des Anspruches 9 gelöst.

Weitere Ausgestaltungen sind in den abhängigen Ansprüchen 2 bis 8 angegeben.

Bei der erfindungsgemäßen Kühlvorrichtung verlaufen zumindest 50% der Kühlrippen wellenförmig. Dies führt bei wärmeabgebenden Kühlflanschen dazu, dass die zur Verfügung stehende Oberfläche der Kühlrippen vergrößert wird, wodurch die Wärmeabgabe erheblich gesteigert werden kann. Im Vergleich zu einer geraden Referenzkühlrippe, welche einen der wellenförmigen Kühlrippe vergleichbaren Verlauf hat, insbesondere die gleiche radiale und axiale Erstreckung sowie gleiche Dicke, hat die wellenförmige Kühlrippe eine größere Wärme abgebende Oberfläche. Der ungerade Verlauf der Kühlrippen erfordert keinen zusätzlichen Bauraum, so dass die Kühlvorrichtung und damit auch der gesamte Elektromotor weiterhin kompakt ausgebildet sein können. Zusätzlich wird durch die von einem geraden Verlauf abweichende Formgestaltung der Kühlrippen auch noch erreicht, dass der Drehton beim Drehen des Rotorkühlflansches nur noch gering ist. Dies wird dadurch erreicht, dass bei Rotationsbewegung des Rotors jeweils gegenüberliegende Kühlrippen des Statorkühlflansches und des Rotorkühlflansches nicht mehr über eine große radiale Erstreckung simultan aneinander vorbeistreichen, insbesondere weil zwischen gegenüberliegenden Kühlrippen über einen großen Bereich, vorteilhaft > 50%, der gemeinsamen radialen Erstreckung, im Moment des aneinander Vorbeistreichens ein Winkel deutlich größer 0°, vorteilhaft > 5° auftritt. Zudem ist dieser Winkel zwischen den Kühlrippen über die radiale Erstreckung variabel.

Auf diese Weise kann durch eine einfache Gestaltung der Kühlrippen in vorteilhafter Weise erreicht werden, dass unter Beibehaltung des kompakten Bauraumes nicht nur die Kühlleistung durch entsprechende Vergrößerung der Kühlrippenoberfläche erhöht, sondern gleichzeitig auch die Lärmentstehung minimiert wird.

Die Wellenform führt zu einer besonders großen Oberflächenvergrößerung der Kühlrippen bei vorgegebener radialer Erstreckung des Kühlflansches. Die Wellenform ergibt im Einsatz des Elektromotors hohe Turbulenzgrade, wodurch die Wärmeabfuhr durch die Kühlluft begünstigt wird. Die Welligkeit ist dadurch gegeben, dass die Kühlrippe im Verlauf ihrer Kühlrippenmittellinie in einer ebenen Projektion gesehen bezüglich einer Referenzgeraden signifikante Ausschläge wechselnd in positive und negative Umfangsrichtung hat. Als Welligkeitsfunktion, ebenfalls in einer ebenen Projektion gesehen, wird die Abweichung (Differenz) im Verlauf der Kühlrippen von ihrer jeweiligen Referenzgeraden in Abhängigkeit der zugehörigen Position auf der Referenzgeraden bezeichnet. Vorteilhaft hat diese Welligkeitsfunktion für einen Großteil der Kühlrippen, vorteilhaft mindestens 80% der Kühlrippen, auf einem Kühlflansch wenigstens zwei lokale Extrema. Die Referenzgerade einer Kühlrippe kann in Radialrichtung des Kühlflansches liegen oder in einem Winkel zur Radialrichtung.

Durch Einstellung der Phasenlage für den größten Teil, insbesondere für alle benachbarten wellenförmigen Kühlrippen kann sehr vorteilhaft die Kühlleistung unabhängig von der Drehrichtung des drehenden Kühlflansches gemacht werden.

Unter einer wellenförmigen Ausbildung ist nicht nur eine reine Wellenform, sondern beispielsweise auch ein sägezahnförmiger Verlauf zu verstehen. Die Welligkeitsfunktionen haben Amplituden, Wellenlängen und Phasenlagen. Die Amplituden und Wellenlängen können über die Erstreckung einer Kühlrippe variabel sein. Die Phasenlage wird bezüglich einem Hüllkreis bestimmt, der das radial innere Ende des Kühlflansches bezeichnet.

Vorteilhaft liegt die Amplitude der welligen Kühlrippen eines Kühlflansches im Bereich von etwa 0,1-fachen bis etwa 0,3-fachen der kühlrippengemittelten Wellenlänge jeweils derselben Kühlrippe.

Die Amplitude der wellenförmigen Kühlrippen kann bevorzugt über den Umfang variieren. Damit wird eine weitere Einstellgröße zur Verfügung gestellt, um die Kühlleistung zu maximieren.

Zu der kompakten Gestaltung trägt in vorteilhafter Weise bei, dass der mittlere Abstand zwischen den Kühlrippen etwa dem zwei- bis sechs-fachen der mittleren Dicke einer Kühlrippe entspricht. Dadurch ist der Abstand zwischen den Kühlrippen trotz kompakter Bauform ausreichend groß, so dass der zwischen den Kühlrippen hindurchströmende Kühlluftstrom über die Oberfläche des Kühlsystems strömen kann.

Vorteilhaft entspricht der Abstand zwischen den Kühlrippen mindestens dem Doppelten einer mittleren Dicke der Kühlrippen. Dieser Abstand kann je nach Größe des Elektromotors zwischen etwa 1,5 mm und etwa 18 mm liegen.

Zu einer kompakten Bauform und guten Fertigbarkeit im Druckgussverfahren trägt bei, dass die Dicke der Kühlrippen in vorteilhafter Weise nur zwischen etwa 1,5 bis etwa 3 mm liegt.

Die Kühlrippen können über ihre Höhe konstante Dicke haben, in Richtung auf ihre Stirnseite aber auch abnehmende Dicke aufweisen. Eine solche Gestaltung ermöglicht eine einfache Entformung beim Druckgussverfahren zur Herstellung der Kühlflansche.

Die Kühlrippen sind vorteilhaft so auf dem Kühlflansch vorgesehen, dass ihre beiden Enden im Bereich eines inneren und eines äußeren Hüllkreis liegen, wobei beide Hüllkreise koaxial zueinander liegen.

Um eine nicht zu große Ausdehnung der Kühlflansche in Radialrichtung zu erhalten, liegt in vorteilhafter Weise das Verhältnis von äußerem Hüllkreis zu innerem Hüllkreis zwischen etwa 1,1 bis etwa 1,6. Auf diese Weise stellt ein Kühlflansch kein Hindernis für die Luftströmung dar, insbesondere dann, wenn der Elektromotor für einen Axialventilator eingesetzt wird.

Um die Kühlleistung unabhängig von der Drehrichtung des drehenden Kühlflansches zu erhalten, ist vorgesehen, dass die Phasenlage der Kühlrippen über den Umfang eines Kühlflansches mit welligen Kühlrippen variiert. Dann liegen benachbarte Kühlrippen nicht parallel zueinander, sondern sind je nach Phasenverschiebung versetzt zueinander angeordnet.

Auf diese Weise kann die Welligkeit der Kühlrippen im Hinblick auf die variierende Phasenlage so optimiert werden, dass unabhängig von der Drehrichtung des Rotorkühlflansches die hohe Kühlleistung zusammen mit den hohen Kühlluftströmungsgeschwindigkeiten und hohen Turbulenzgraden erzielt wird. Dies kann beispielsweise dadurch erreicht werden, dass die Phasenlagen der Welligkeitsfunktion aller welligen Kühlrippen eines Kühlflansches, im Bogenmaß ausgedrückt, im Intervall 0 bis 2*π etwa gleichmäßig verteilt sind, d.h. dass sich der Einfluss der Phasenlagen der einzelnen welligen Kühlrippen eines Kühlflansches über den Umfang gesehen wieder herausmittelt. Eine erste mögliche Bedingung für die im Wesentlichen geltende Drehrichtungsunabhängigkeit eines Kühlsystems ist die, dass die Summe der Welligkeitsfunktionen aller Kühlrippen eines Kühlflansches eine Amplitude hat, die 20% der mittleren Amplitude der Welligkeitsfunktionen dieser Kühlrippen nicht überschreitet (d.h. bei der additiven Überlagerung der Welligkeitsfunktionen überwiegen phasenlagenbedingte Auslöschungseffekte)

Eine zweite mögliche Bedingung (nicht Teil der beanspruchten Erfindung), deren Einhaltung die Drehrichtungsunabhängigkeit der Kühlleistung weiter optimiert und die vorteilhaft in Kombination mit der ersten Bedingung eingehalten wird, ist die, dass der Mittelwert der bezüglich des Drehsinns vorzeichenbehafteten Phasenverschiebung zwischen den Phasenlagen aller Paare jeweils direkt benachbarten Kühlrippen eines Kühlflansches dimensionslos im Bogenmaß ausgedrückt im Betrag (Absolutwert) nicht größer ist als π/6. Dadurch wird der Einfluss des Vorzeichens der Phasenverschiebung zwischen benachbarten Kühlrippen über einen Umlauf in etwa ausgemittelt.

Vorteilhaft hierbei ist, dass die Phasenverschiebung zwischen zwei direkt benachbarten Kühlrippen eines Kühlflansches nicht zu groß ist. Erfindungsgemäß ist die Phasenverschiebung im Bogenmaß ausgedrückt zwischen zwei benachbarten Kühlrippen eines Kühlflansches für mindestens 80% aller möglichen direkt benachbarten Kühlrippen des Kühlflansches betragsmäßig nicht größer als π/3. Dadurch können strömungsgünstige Kanäle zwischen jeweils benachbarten Kühlrippen ausgebildet werden.

Um Drehrichtungsunabhängigkeit der Kühlleistung von Kühlvorrichtungen mit welligen Kühlflanschen weitgehend sicherzustellen, ist es insbesondere wichtig, beschriebene Bedingungen an die Phasenlagen und Referenzgeraden der Kühlrippen bei allen wärmeabgebenden Kühlflanschen zu erfüllen. Für ideale Drehrichtungsunabhängigkeit sollten die entsprechenden Bedingungen allerdings auch bei den nur aerodynamischen Kühlflanschen erfüllt werden.

Die Erfindung wird anhand einiger in den Zeichnungen dargestellter Ausführungsformen näher erläutert. Es zeigen
- Fig. 1: eine axiale Draufsicht auf eine Statorbuchse mit einem Statorkühlflansch einer erfindungsgemäßen Kühlvorrichtung, von der Rotorseite aus gesehen,
- Fig. 1a: im Axialschnitt einen Elektromotor mit einer erfindungsgemäßen Kühlvorrichtung,
- Fig. 2: im Axialschnitt die Statorbuchse gemäß Fig. 1 zusätzlich mit einem Rotorkühlflansch einer erfindungsgemäßen Kühlvorrichtung,
- Fig. 3: in einer Darstellung entsprechend Fig. 2 eine weitere Ausführungsform einer erfindungsgemäßen Kühlvorrichtung mit dargestellter Statorbuchse,
- Fig. 4: in perspektivischer Darstellung die Statorbuchse gemäß Fig. 1 von schräg vorn,
- Fig. 5: in axialer Draufsicht eine Statorbuchse mit einer weiteren Ausführungsform eines Statorkühlflansches einer erfindungsgemäßen Kühlvorrichtung,
- Fig. 6: die Statorbuchse gemäß Fig. 5 in perspektivischer Darstellung,
- Fig. 7: in axialer Draufsicht eine Statorbuchse mit einer weiteren Ausführungsform eines Statorkühlflansches einer erfindungsgemäßen Kühlvorrichtung,
- Fig. 8: die Statorbuchse gemäß Fig. 7 in perspektivischer Darstellung,
- Fig. 9: in schematischer Darstellung eine einzelne Kühlrippe auf einem Kühlflansch,
- Fig. 10: in vergrößerter und schematischer Darstellung die Kühlrippe gemäß Fig. 9 durch ihre Kühlrippenmittellinie mit charakteristischen Größen dargestellt,
- Fig. 11a bis Fig. 11d: in vergrößerter und schematischer Darstellung unterschiedliche Querschnittsformen der Kühlrippen,
- Fig. 12: in Draufsicht eine weitere Ausführungsform eines Kühlflansches einer nicht erfindungsgemäßen Kühlvorrichtung, wobei alle welligen Kühlrippen gleiche Phasenlage aufweisen und die Kühlleistung drehrichtungsabhängig ist,
- Fig. 13: in Draufsicht eine weitere Ausführungsform eines Kühlflansches einer nicht erfindungsgemäßen Kühlvorrichtung, wobei jeweils benachbarte Kühlrippen sich in ihrer Phasenlage im Bogenmaß ausgedrückt abwechselnd um +π und - π unterscheiden und die Kühlleistung im Wesentlichen drehrichtungsunabhängig ist,
- Fig. 14: in Draufsicht eine weitere Ausführungsform eines Kühlflansches einer nicht erfindungsgemäßen Kühlvorrichtung, wobei die welligen Kühlrippen eher zackenförmigen Verlauf haben.

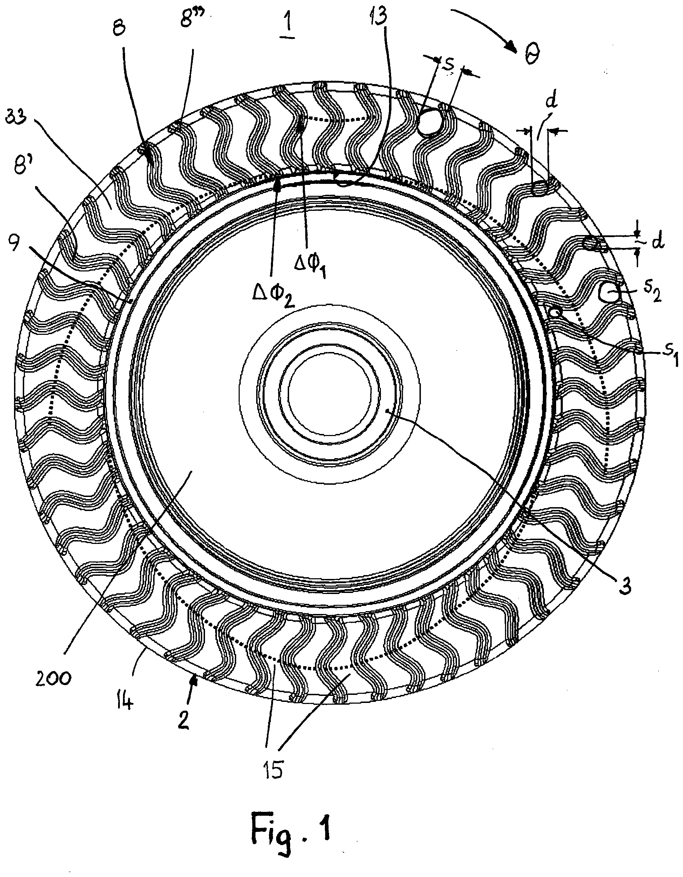

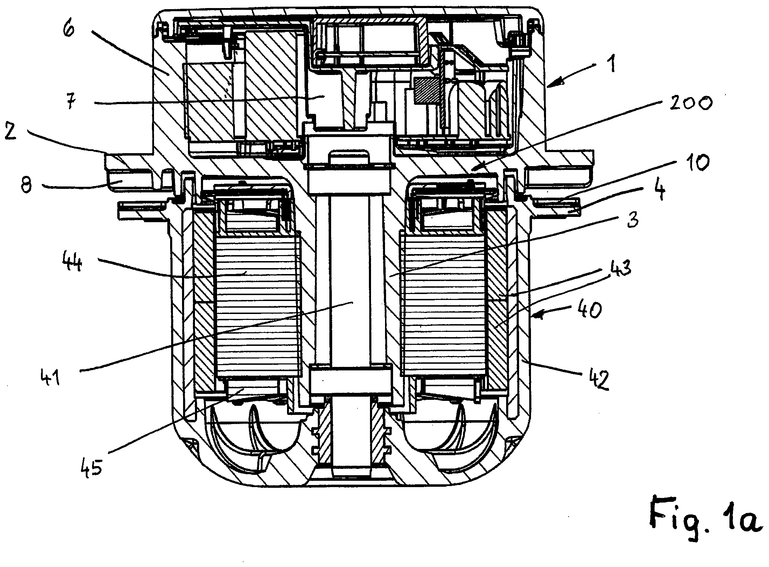

Fig. 1a zeigt beispielhaft einen Elektromotor in Form eines Außenläufermotors, der beispielsweise ein elektronisch kommutierter Gleichstrommotor sein kann. Er hat eine Statorbuchse 1 mit einem Kühlflansch 2, von dem mittig eine Lagerbuchse 3 absteht. Sie erstreckt sich in einen Rotor 40, der mit einer Rotorwelle 41 versehen ist, die in der Lagerbuchse 3 in bekannter Weise drehbar gelagert ist. Der Rotor 40 hat ein Rotorgehäuse 42, an dessen Innenseite Permanentmagnete 43 befestigt sind. Sie umgeben unter Bildung eines ringförmigen Luftspaltes ein Statorpaket 44, das mit einer Wicklung 45 in bekannter Weise versehen ist. Das Statorpaket 44 ist vorteilhaft ein aus geschichteten Lamellen bestehendes Blechpaket.

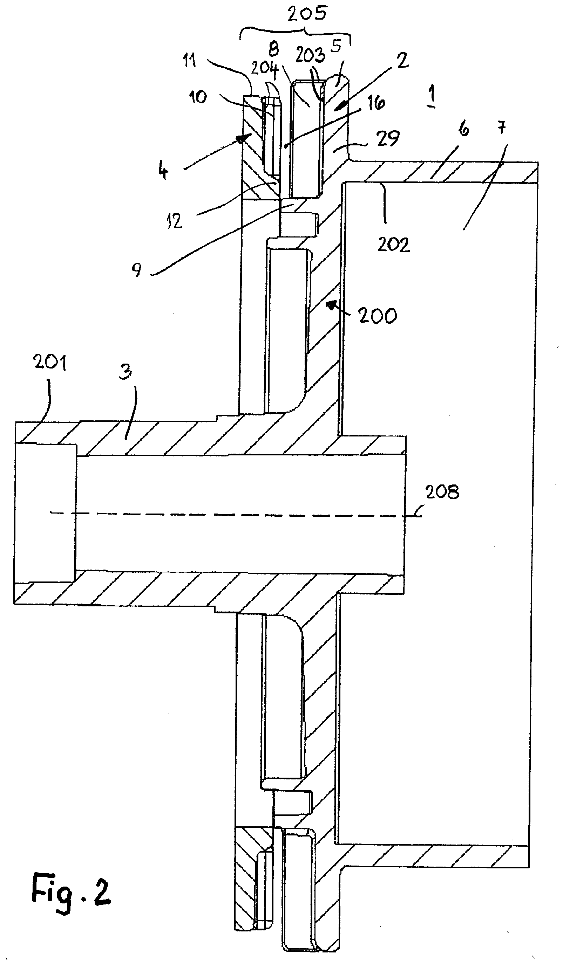

Fig. 1 zeigt eine axiale Draufsicht auf die Statorbuchse 1, die Teil des Stators des Außenläufermotors ist, von der Rotorseite aus gesehen. Die Statorbuchse 1 hat, wie Fig. 2 zeigt, den Statorflansch 200, der radial von der Lagerbuchse 3 absteht, die vorteilhaft einstückig mit dem Statorflansch 200 ausgebildet ist und in der die Rotorwelle 41 des Rotors 40 drehbar gelagert ist. Im Ausführungsbeispiel wird auf die Außenseite 201 (Fig. 2) der Lagerbuchse 3 das Blechpaket 44 mit den Statorwicklungen 45 aufgebracht.

Mit Abstand vom äußeren Rand 5 des Statorflansches 200 steht von ihm quer eine umlaufende Wand 6 ab, die einen Aufnahmeraum 7 für elektrische/elektronische Bauteile umschließt. In seinem radial äußeren Bereich ist integral am Statorflansch 200 ein Statorkühlflansch 2 vorgesehen. Dieser ist mit Kühlrippen 8 versehen, die über den Umfang des Statorkühlflansches 2 verteilt angeordnet sind. Wie aus Fig. 1 hervorgeht, sind die Kühlrippen 8 über den Umfang des Statorkühlflansches 2 vorteilhaft etwa gleichmäßig verteilt angeordnet. Die Kühlrippen 8 erstrecken sich in radialer Richtung etwa vom äußeren Rand 5 des Statorflansches 200 aus bis zu einem ringförmigen Vorsprung 9, der koaxial zur Lagerbuchse 3 liegt und der beispielhaft einen Außendurchmesser aufweist, der kleiner ist als der Innendurchmesser der Wand 6. Der Ringvorsprung 9 und die Wand 6 liegen auf verschiedenen Seiten des Statorflansches 200. Wie die Wand 6 ist auch der Vorsprung 9 vorteilhaft einstückig mit dem Statorflansch 200 ausgebildet. Das radial innere Ende des Statorkühlflansches 2 ergibt sich durch den Vorsprung 9 bzw. die radial inneren Enden der Kühlrippen 8.

In diesem Ausführungsbeispiel wird Wärme, die in elektrischen oder elektronischen Komponenten des Stators entsteht, über die Oberfläche 203 des Statorkühlflansches 2 an die Umgebungsluft abgeführt. Diese Wärme kann beispielsweise von der Wicklung kommen und über die Fläche 201 in die Statorbuchse 1 eingeleitet werden und/oder im Bereich der Elektronik im Aufnahmeraum 7 entstehen und über die Fläche 202 in die Statorbuchse 1 eingeleitet werden. Die Fläche 202 ist im Ausführungsbeispiel die Innenseite der Wand 6. Die Statorbuchse 1 ist aus einem gut wärmeleitfähigen Material, beispielsweise Aluminium, gefertigt. Dadurch kann die Wärme gut zum Statorkühlflansch 2 geleitet werden. Die einstückig integrale Ausbildung des Statorkühlflansches 2 mit der Statorbuchse 1 ermöglicht im Ausführungsbeispiel eine optimale Wärmeleitung von den Wärmeeinleitflächen 201, 202 zur die Wärme abgebenden Oberfläche 203 des Statorkühlflansches 2.

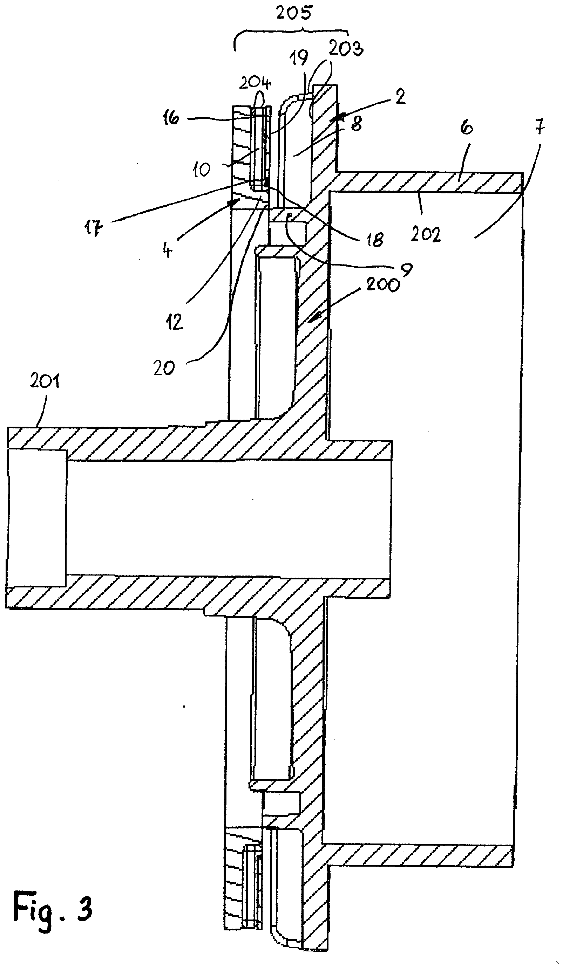

Am Rotor 40 ist, wie es in Fig. 2 oder auch im Ausführungsbeispiel nach Fig. 3 dargestellt ist, außenseitig ein Rotorkühlflansch 4 vorgesehen, der im Betrieb des Motors zusammen mit dem Rotor 40 um die Achse 208 der Lagerbuchse 3 dreht. Vom Rotor ist in den Fig. 2 und 3 nur der Rotorkühlflansch 4 mit darauf angeordneten, einstückig mit ihm ausgebildeten Kühlrippen 10 dargestellt. Die Kühlrippen 10 erstrecken sich vom äußeren Rand 11 des Rotorkühlflansches 4 bis zu einem Ringvorsprung 12. Die beiden Kühlflansche 2 und 4 liegen mit geringem Abstand einander gegenüber. Dabei sind die Kühlrippen 8 und 10 einander zugewandt. Der Rotorkühlflansch 4 kann einstückig integral mit dem Rotor 40 ausgebildet oder ein separates Teil sein, welches an den übrigen Teilen des Rotors befestigt ist. Eine Kühlvorrichtung 205 im Sinne der Erfindung besteht aus den beiden gegenüberliegenden Kühlflanschen 2, 4 mit den Kühlrippen 8 und 10. Im Betrieb des Motors weisen die beiden Kühlflansche 2, 4 eine rotatorische Relativbewegung zueinander auf. Jeder Kühlflansch 2, 4 kann zur Wärmeabgabe an seiner Oberfläche 203, 204 an die Umgebungsluft dienen und/oder die Wärmeabgabe der Kühlvorrichtung 205 an einem der Kühlflansche 2, 4 durch eine aerodynamisch wirksame Interaktion infolge der Relativbewegung der beiden Kühlflansche 2, 4 zueinander maßgeblich begünstigen. Dient der Kühlflansch 2, 4 zur Wärmeabgabe an seiner Oberfläche 203, 204, so ist er vorteilhaft einstückig mit weiteren, die Wärme an anderer Stelle aufnehmenden Teilen aus gut wärmeleitfähigem Material ausgebildet. Dient er nur der aerodynamischen Interaktion, kann er beispielsweise auch als separates Kunststoffelement angefertigt sein. Die Funktion der Wärmeabgabe können je nach Notwendigkeit der Statorkühlflansch 2, der Rotorkühlflansch 4 oder beide Kühlflansche 2, 4 innehaben.

Der beschriebene grundsätzliche Aufbau des Außenläufermotors ist bekannt, so dass er auch nicht näher beschrieben wird.

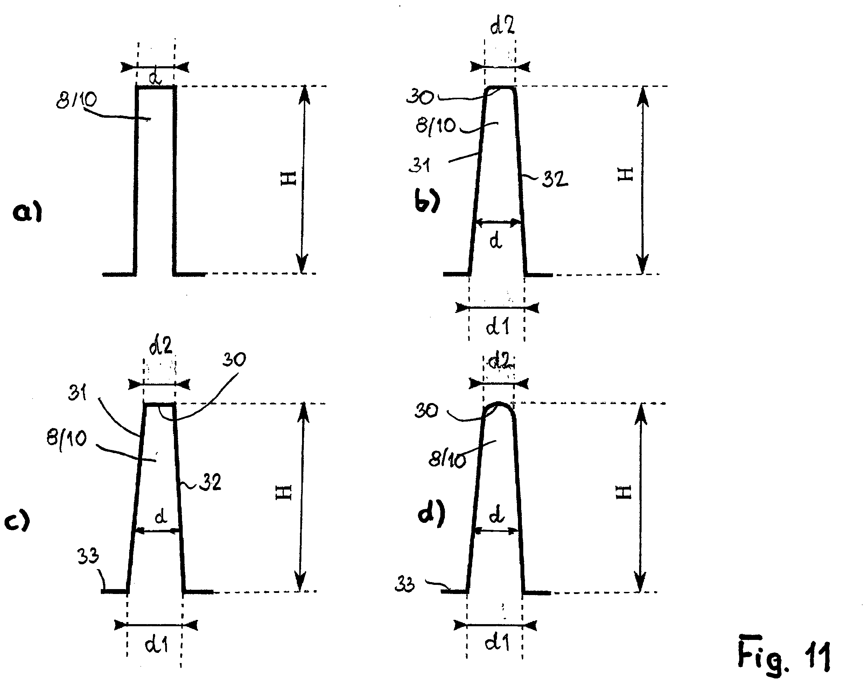

Vorteilhaft haben die Kühlrippen 8, 10 eine Höhe H (Fig. 11), etwa senkrecht zur Basisfläche 33 (Fig. 1) des Kühlflansches 2, 4 gemessen, die die Höhe des zugehörigen Ringvorsprunges 9, 12 nicht übersteigt.

Wie Fig. 2 zeigt, haben die Kühlrippen 10 des Rotorkühlflansches 4 im Ausführungsbeispiel eine geringere radiale Länge als die Kühlrippen 8 des Statorkühlflansches 2. Zudem steht der Statorkühlflansch 2 im dargestellten Ausführungsbeispiel radial über den Rotorkühlflansch 4 vor. Die beschriebenen Abmessungen der Kühlrippen 8, 10, des Ringvorsprunges 12 sowie des Statorkühlflansches 2 und des Rotorkühlflansches 4 sind nicht auf die dargestellten und beschriebenen Abmessungen beschränkt. So können die Kühlrippen 8, 10 beispielsweise auch gleiche radiale Erstreckung haben. Ebenso ist es möglich, dass der Statorkühlflansch 2 und der Rotorkühlflansch 4 gleichen Außendurchmesser haben. Im Ausführungsbeispiel haben die Kühlrippen 8 des Statorkühlflansches 2 merklich größere Abmessungen als die Kühlrippen 10 der Rotorkühlflansches 4, weil sie der Wärmeabgabe dienen, welche durch eine größere Kontaktfläche zwischen dem wärmeabgebenden Körper und der Umgebungsluft begünstigt wird, während die Kühlrippen 10 des Rotorkühlflasches 4 im Ausführungsbeispiel nur eine aerodynamische Funktion innehaben und dadurch die Wärmeabgabe der Kühlvorrichtung 205 entscheidend begünstigen.

Im Einsatz des Außenläufermotors wird durch die Rotation des Rotorkühlflansches 4 relativ zum Statorkühlflansch 2 ein Luftstrom zwischen den Kühlrippen 8 und 10 erzeugt, der die Wärme von den Kühlflanschoberflächen 203 und/oder 204 aufnimmt und abtransportiert. Der Rotorkühlflansch 4 mit den Kühlrippen 10 wirkt dabei im Ausführungsbeispiel vergleichbar mit einem Radiallüfterrad und fördert Luft mit hoher Geschwindigkeit von innen nach außen und schleudert diese Luft, welche die abzuführende Wärme von der Kühlflanschoberfläche 203 und/oder 204 aufgenommen hat, radial vom Motor weg. Infolgedessen entsteht im radial inneren Bereich der Kühlvorrichtung 205 ein Unterdruck, und frische Umgebungsluft wird am Statorkühlflansch 2 mit den Kühlrippen 8 radial von außen nach innen angesaugt, wobei sie die Abwärme aufnimmt. Zusätzlich wird durch die unmittelbare Interaktion der gegenüberliegenden Kühlrippen 8 und 10 eine hohe Turbulenz erzeugt, die die Wärmeabgabe an die Luft weiter begünstigt. Allerdings kann diese Interaktion auch Ursache einer starken Schallentstehung sein, insbesondere wenn alle Kühlrippen 8 und 10 radial ausgerichtet und gerade sind (Stand der Technik), oder bzw. wenn sie derart gestaltet sind, dass an einer gegebenen Relativposition von Statorkühlflansch 2 und Rotorkühlflansch 4 Kühlrippen 8 und 10 über ihre gesamte gemeinsame radiale Erstreckung einander genau gegenüberliegen und parallel verlaufen, d.h. wenn sie einander gerade gegenüberliegen, in ihrem Verlauf keinen oder nur einen sehr geringen Winkel zueinander aufweisen. Durch die erfindungsgemäße Gestaltung der Kühlrippen 8, 10 in welliger Formgebung wird diese Drehtonentstehung maßgeblich reduziert.

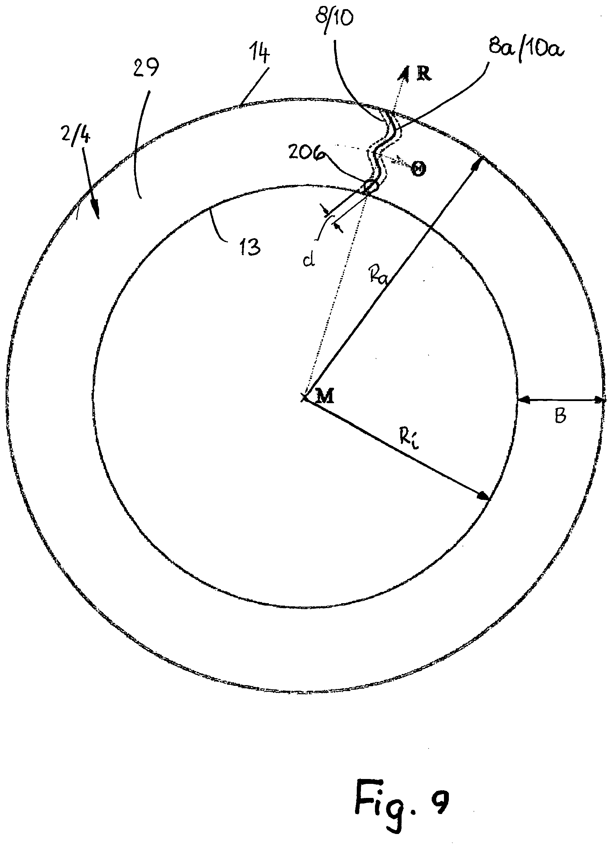

Die Kühlrippen 8 des Statorkühlflansches 2 sind im Ausführungsbeispiel gemäß Fig. 1 wellenförmig ausgebildet. Fig. 9 zeigt in Draufsicht schematisch einen Kühlflansch 2, 4, der ein Rotorkühlflansch oder ein Statorkühlflansch sein kann, mit nur einer dargestellten wellenförmigen Kühlrippe 8, 10. Die radial innere Berandungslinie 13 (Hüllkreis) des Kühlflansches 2, 4, die durch das radial innere Ende der Kühlrippen 8, 10 definiert werden kann, hat einen Radius Ri. Die radial äußere Berandungslinie 14 (Hüllkreis) des Kühlflansches 2, 4, die durch das radial äußere Ende der Kühlrippen 8, 10 definiert werden kann, hat einen Radius Ra. Die radiale Erstreckung des Kühlflansches 2,4 ist demnach B=Ra-Ri.

Von der Kühlrippe 8, 10 sind gestrichelt die äußeren Konturen (Silhouetten) zu erkennen, wobei der Abstand dieser äußeren Konturen immer etwa eine Kühlrippendicke d der Kühlrippe 8, 10 charakterisiert. Die Kühlrippendicke d ist an einer radialen und axialen Position innerhalb der betreffenden Kühlrippe 8, 10 der Durchmesser derjenigen einbeschriebenen Kugel 206 (Fig.9), die gerade noch zwischen den beiden Kühlrippenwänden eingepasst werden kann. Als kühlrippengemittelte Kühlrippendicke dmr wird noch die für jede Kühlrippe 8, 10 gemittelte Dicke d bezeichnet. Die mittlere Kühlrippendicke dm eines Kühlflansches 2, 4 ist etwa die gemittelte Dicke dmr aller Kühlrippen des Kühlflansches 2, 4. In Fig. 9 ist für die Kühlrippe 8, 10 noch die Kühlrippenmittellinie 8a, 10a eingezeichnet, mit deren Hilfe die Welligkeit der Kühlrippe 8, 10 gut beschrieben werden kann. Diese Kühlrippenmittellinie 8a, 10a kann dadurch definiert werden, dass man die Flächenschwerpunkte aller Schnittflächen einer Kühlrippe 8, 10 mit Zylindermänteln verschiedener Radien koaxial zur Rotationsachse M miteinander verbindet.

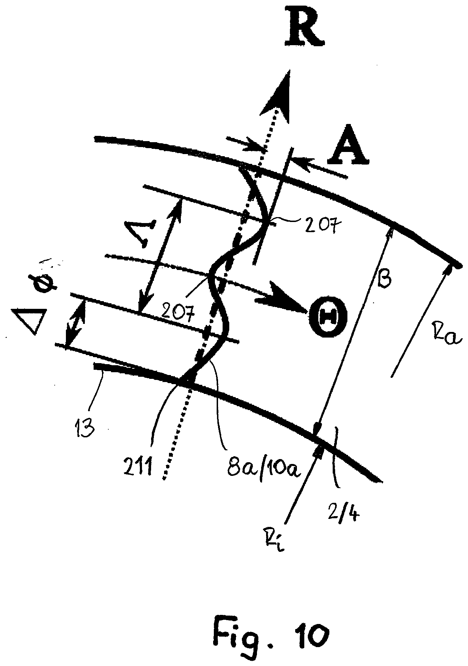

In Fig. 10 ist in vergrößerter Darstellung eine Kühlrippe 8, 10 eines Kühlflansches 2, 4 schematisch durch den Verlauf ihrer Kühlrippenmittellinie 8a, 10a dargestellt. Diese Kühlrippenmittellinie 8a, 10a wird gemäß Fig. 10 in einer Projektion auf die Ansichtsebene betrachtet, die im Beispiel senkrecht zur Drehachse des Motors liegt. Zur Erläuterung des Begriffs "wellenförmig" wird noch eine Referenzgerade R betrachtet, welche die Kühlrippenmittellinie 8a, 10a mindestens dreimal schneidet. Hat demnach eine Kühlrippenmittellinie 8a, 10a einen im Wesentlichen geraden, nicht wellenförmigen Verlauf, so weist sie gegenüber der Referenzgerade R keine bzw. nur sehr geringfügige Ausschläge auf. Eine wellenförmige Kühlrippenmittellinie 8a, 10a weist allerdings über ihren radialen Verlauf wechselnd Ausschläge in positiver und negativer Umfangsrichtung Θ auf. Die Referenzgeraden R sei nun immer so gelegt, dass die Ausschläge der Kühlrippenmittellinie 8a, 10a in positive und negative Umfangsrichtung Θ möglichst symmetrisch zur Referenzgerade R seien. Zur genaueren Erläuterung werden noch die Maximalausschläge 207 der Kühlrippenmittellinie 8a, 10a definiert, die lokale Extrema des Ausschlags sind. Dabei werden das innere und äußere Ende der Kühlrippenmittellinie 8a, 10a nur dann als Maximalausschlag gewertet, wenn aus dem Kurvenverlauf ersichtlich wird, dass an diesen Stellen auch bei gedachter Kurvenweiterführung ein lokales Maximum vorliegt. Die Referenzgerade R kann nun so definiert werden, dass immer zwei benachbarte Maximalausschläge gleichen Betrag oder, im Mittel über alle Maximalausschläge einer Kühlrippenmittellinie 8a, 10a gesehen, in ihrem Betrag möglichst geringe Abweichungen voneinander haben. Beim Ausführungsbeispiel gemäß Fig. 10 ist diese Referenzgerade R erfindungsgemäß in Radialrichtung ausgerichtet. Als Welligkeitsfunktion jeder Kühlrippe 8, 10 wird die Differenz zwischen ihrer Kühlrippenmittellinie 8a, 10a und ihrer Referenzgeraden R als Funktion der Lauflänge auf R bezeichnet. Dabei wird der Nullpunkt 211 auf den Schnittpunkt von R mit dem inneren Hüllkreis 13 gesetzt. Eine wellenförmige Kühlrippe 8, 10 hat eine Welligkeitsfunktion, die über den Verlauf der Kühlrippe 8, 10 mindestens zwei (lokale) Extrema aufweist, vorzugsweise mindestens drei.

Der wellenförmige Verlauf der Kühlrippe 8, 10 kann gemäß Fig. 10 mittels ihrer Kühlrippenmittellinie 8a, 10a und der daraus abgeleiteten Welligkeitsfunktion insbesondere charakterisiert werden durch Amplitude A, Wellenlänge Λ und Phasenlage ΔΦ. Als Amplitude A der Welligkeit der Kühlrippenmittellinie 8a, 10a wird immer der Betrag eines lokalen Extremwertes der Welligkeitsfunktion bezeichnet. Die Wellenlänge Λ ist der Abstand zwischen zwei aufeinanderfolgenden lokalen Maxima oder zwei aufeinanderfolgenden lokalen Minima der Welligkeitsfunktion der Kühlrippenmittellinie 8a, 10a. Die Größe der Amplitude A oder der Wellenlänge Λ kann konstant sein oder über den Verlauf der Kühlrippenmittellinie 8a, 10a variieren. Da die Amplitude A und/oder die Wellenlänge Λ über eine Kühlrippenmittellinie 8a, 10a variabel sein können, wird noch für jede Kühlrippe 8, 10 bzw. deren Kühlrippenmittellinie 8a, 10a eine rippengemittelte Amplitude Amr bzw. eine rippengemittelte Wellenlänge Λmr definiert, die jeweils und für jede Kühlrippenmittellinie 8a, 10a den Mittelwert aller bestimmbaren Amplituden A bzw. Wellenlängen Λ darstellen. Die Phasenlage ΔΦ beschreibt die Lage des ersten Maximums (in positiver Umfangsrichtung Θ, nicht Minimums) der Welligkeitsfunktion einer Kühlrippe 8, 10 bezüglich deren Ursprungs- bzw. Nullpunkt 211. Die Phasenlage Δϕ im Bogenmaß ist definiert durch Δϕ= 2*π*ΔΦ/ Λmr mit der Kreiszahl π und der rippengemittelten Wellenlänge Λmr.

Durch die wellenförmige Ausbildung der Kühlrippen 8, 10 kann unter bestimmten Rahmenbedingungen die Oberfläche 203, 204 insbesondere eines Wärme abgebenden Kühlflansches 2, 4 im Vergleich zu geraden bzw. radialen und geraden Kühlrippen vergrößert werden, sodass die Wärmeabgabe des Kühlflansches 2, 4 maßgeblich verbessert wird. Die Rahmenbedingungen sind insbesondere gegeben durch den zur Verfügung stehenden Bauraum in radialer und axialer Richtung, durch eine minimale Kühlrippendicke d der Kühlrippen 8, 10 aus fertigungstechnischen Gründen und einen minimalen Abstand s (Fig. 1) benachbarter Kühlrippen 8, 10 zueinander, wobei strömungstechnische Gesichtspunkte berücksichtigt werden müssen. Es ist nämlich für die zwischen jeweils benachbarten Kühlrippen 8, 10 durchströmende Luft eine ausreichende Durchströmfläche etwa quer zur Durchströmrichtung zu gewährleisten, also insbesondere ein ausreichend großer Kühlrippenabstand s. Der Kühlrippenabstand s ist an einer beliebigen Stelle zwischen zwei benachbarten Kühlrippen 8, 10 definiert durch den Durchmesser derjenigen Kugel, die gerade noch zwischen die Flanken zweier benachbarter Kühlrippen 8, 10 einbeschrieben werden kann (siehe Fig. 1). Die beiden letztgenannten Rahmenbedingungen (Kühlrippendicke d und Kühlrippenabstand s) sind ursächlich dafür, dass die Zahl der Rippen in Umfangsrichtung nicht beliebig vergrößert werden kann, um eine gute Wärmeabgabe zu erreichen.

Mit Hilfe der Referenzgeraden R kann für jede wellenförmige Kühlrippe 8, 10 auch eine gerade (ungewellte) Referenzkühlrippe definiert werden. Diese gerade Referenzkühlrippe, deren gedachte Kühlrippenmittellinie genau auf R liegt, hat die gleiche axiale und radiale Erstreckung wie die zugehörige wellenförmige Kühlrippe sowie den gleichen Dickenverlauf. Im Vergleich zu ihrer geraden Referenzkühlrippe hat eine wellenförmige Kühlrippe 8, 10 eine signifikant größere Oberfläche, was vorteilhaft für die Wärmeabgabe ist. Das Verhältnis der Oberfläche einer wellenförmigen Kühlrippe 8, 10 und ihrer geraden Referenzkühlrippe hängt maßgeblich von der Amplitude A und der Wellenlänge Λ ab, bezogen auf die radiale Erstreckung B der Kühlrippe 8, 10. Es beträgt für eine wellenförmige Kühlrippe 8, 10 vorteilhaft mindestens 1.05.

Zusätzlich zur Verbesserung der Wärmeabgabe infolge der Oberflächenvergrößerung können durch die wellenförmige Gestaltung der Kühlrippen 8, 10 weitere Vorteile der Wärmeabgabe dadurch erzielt werden, dass die Strömungsgeschwindigkeiten und Turbulenzgrade im Vergleich zu einer geraden Gestaltung der Kühlrippen erhöht werden.

In vielen Ausführungsformen genügt es, dass einer der beiden Kühlflansche 8 oder 10 mit wellenförmigen Kühlrippen 8 bzw. 10 versehen ist. Insbesondere wenn nur einer der Kühlflansche Wärme abgebende Funktion hat, kann es ausreichen, dass dieser mit wellenförmigen Kühlrippen 8 bzw. 10 versehen ist.

Durch geeignete Gestaltung der wellenförmigen Kühlrippen 8, 10 von Rotorkühlflansch 4 und/oder Statorkühlflansch 2 kann die Drehtonerzeugung gegenüber gerader oder nicht wellenförmiger Gestaltung aller Kühlrippen maßgeblich reduziert werden.

Um eine sehr gute Wärmeabgabe zu erreichen, müssen die Wellenlängen Λ, die Amplituden A, die Phasenlagen ΔΦ im Zusammenspiel mit den Kühlrippendicken d (Fig. 1), der Kühlrippenanzahl n, den inneren und äußeren Radien Ri und Ra des Kühlflansches 2, 4 und der daraus sich ergebenden radialen Erstreckung B=Ra-Ri des Kühlflansches 2, 4 sowie auch der Höhe H der Kühlrippen 8, 10 aufeinander abgestimmt werden. Die Höhe H der Kühlrippen 8, 10 ist dabei ihre Erstreckung etwa senkrecht zur Basisfläche 33 eines Kühlflanschs 2, 4, siehe auch Fig. 11. Für die Ausführung solcher Optimierungsaufgaben bietet sich die Anwendung von numerischer Strömungssimulation (CFD) an, mit deren Hilfe das Kühlverhalten einer Kühlvorrichtung 205 am Computermodell simuliert werden kann. Dabei können insbesondere die Parameter Λ, A und ΔΦ zwischen Statorkühlflansch 2 und Rotorkühlflansch 4 sowie zwischen benachbarten Kühlrippen 8, 10 variieren. Für die Amplitude A und die Wellenlänge Λ werden noch deren Mittelwerte Am bzw. Λm über den gesamten Kühlflansch 2, 4 gesehen eingeführt, welche Mittelwerte von Amplitude A bzw. Wellenlänge Λ für alle radialen Positionen sowie alle Kühlrippenmittellinien 8a, 10a eines Kühlflansches 2 bzw. 4 darstellen. Als besonders vorteilhaft für die radiale Erstreckung B eines Wärme abgebenden Kühlflansches 2, 4 hat sich ein Wert von 20 bis 45% vom Radius Ri des inneren Hüllkreises 13 erwiesen. Nicht Wärme abgebende Kühlflansche 2, 4 sind vorteilhaft in ihrer radialen Erstreckung B kompakter und weisen einen Wert für B von 10%-30% von Ri auf.

Die Wellenlänge Λ liegt bei einer vorteilhaften Ausführungsform eines Wärme abgebenden Kühlflanschs im Bereich von 70%-170% von B. Niedrigere Werte von Λ würden zwar die Oberfläche der Kühlrippen 8, 10 weiter vergrößern, aber die Luftströmung negativ beeinflussen. Eine Amplitude A ist vorteilhaft das 0.1- bis 0.3-fache der Wellenlänge Λ. Die Wahl einer solchen Amplitude führt zu vorteilhafter Wärmeabgabe an einem Wärme abgebenden Kühlflansch 2, 4 sowie zu einer maßgeblichen Reduktion des Drehtons, falls die Kühlrippen 8, 10 von mindestens einem der beiden Kühlflansche 2, 4 dergestalt ausgeführt sind. Die mittlere Kühlrippendicke dm der Kühlrippen 8, 10 des Kühlflansches 2, 4 ist vorteilhaft kleiner als der mittlere Kühlrippenabstand sm des Kühlflansches 2, 4, der die Breite des zwischen zwei benachbarten Kühlrippen 8, 10 gebildeten Strömungskanals 15 charakterisiert, vorteilhafterweise ist 6 > sm/dm > 1.5.

Wie aus Fig. 1 hervorgeht, variiert im dargestellten Ausführungsbeispiel die Phasenlage ΔΦ der Kühlrippen 8 über den Umfang des Statorkühlflansches 2. In Fig. 1 sind beispielhaft für drei Kühlrippen 8 die zugehörigen Phasenlagen ΔΦ angegeben.

Durch Variation der Phasenlage ΔΦ bzw. Δϕ von wellenförmigen Kühlrippen 8, 10 über den Umfang eines Kühlflansches 2, 4 ist es möglich, die hohe Kühlleistung unabhängig von der Drehrichtung Θ eines Rotorkühlflansches 4 relativ zu einem Statorkühlflansch 2 zu gewährleisten. Im Ausführungsbeispiel gemäß Fig. 1 sind über den Umfang des Statorkühlflansches 1 n=48 wellige Kühlrippen 8 vorgesehen. Mit gestrichelten Linien ist der Verlauf der Phasenlage der einzelnen Kühlrippen 8 veranschaulicht. Dieser Phasenlagenverlauf über den Umfang des Statorkühlflansches 2 ist nur beispielhaft zu verstehen. Der Phasenlagenverlauf wird so gewählt, dass unabhängig von der Drehrichtung Θ des Kühllüfterrades 4 die gewünschte Kühlwirkung eintritt.

Ohne eine Variation der Phasenlage von wellenförmigen Kühlrippen 8, 10 entsteht bezüglich der Kühlleistung der Kühlvorrichtung 205 eine Vorzugsdrehrichtung, das heißt, die Kühlwirkung einer Kühlvorrichtung 205 ist bei einer solchen Konfiguration für eine Drehrichtung höher als für die entgegengesetzte. Das Ausmaß des Unterschieds bei der drehrichtungsabhängigen Kühlwirkung ist größer, wenn bei einem Wärme abführenden Kühlflansch 2,4 mit wellenförmigen Kühlrippen 8, 10 die Phasenlage ΔΦ nicht geeignet variiert ist, als bei einem nur aerodynamisch wirksamen Kühlflansch 2, 4. So kann es sein, dass bei einem nur aerodynamisch wirksamen Kühlflansch 2, 4 wellenförmige Kühlrippen 8, 10 ohne Variation der Phasenlage ΔΦ eingesetzt werden können, ohne dass die Drehrichtungsabhängigkeit der Kühlwirkung kritische Werte erreicht.

Generell kann natürlich für Motoren auch eine Kühlvorrichtung 205 mit wellenförmigen Kühlrippen 8 bzw. 10 auf dem Statorkühlflansch 2 und/oder auf dem Rotorkühlflansch 4 eingesetzt werden, welche für eine Drehrichtung eine bessere Kühlleistung aufweist als für die entgegengesetzte. Dies ist insbesondere dann der Fall, wenn der Motor nur für eine bestimmte Drehrichtung eingesetzt wird.

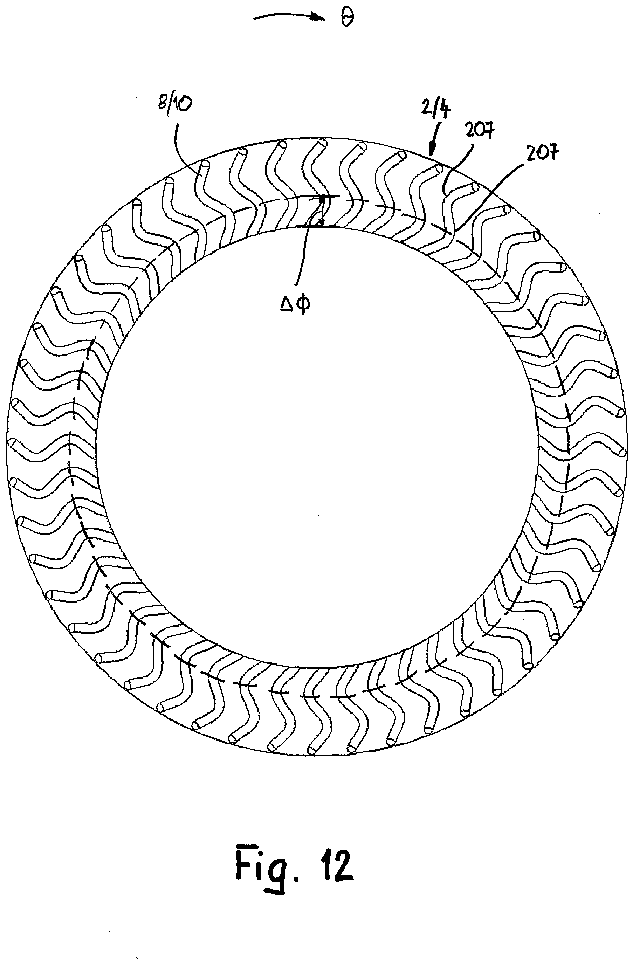

Ein Kühlflansch 2, 4 mit wellenförmigen Kühlrippen 8, 10 mit konstanter Phasenlage ist in Fig. 12 dargestellt. Wird ein die Wärme abführender Kühlflansch 2, 4 dergestalt ausgeführt, ist eine bedeutende Abhängigkeit der Wärmeabfuhr von der Drehrichtung Θ des Motors ausgeprägt. Insbesondere in dieser Vorzugsdrehrichtung kann eine sehr hohe Wärmeabfuhr erreicht werden. Für Motoren, die mit beiden Drehrichtungen eingesetzt werden sollen, wäre ein derartiger Kühlflansch 2, 4 jedoch weniger geeignet.

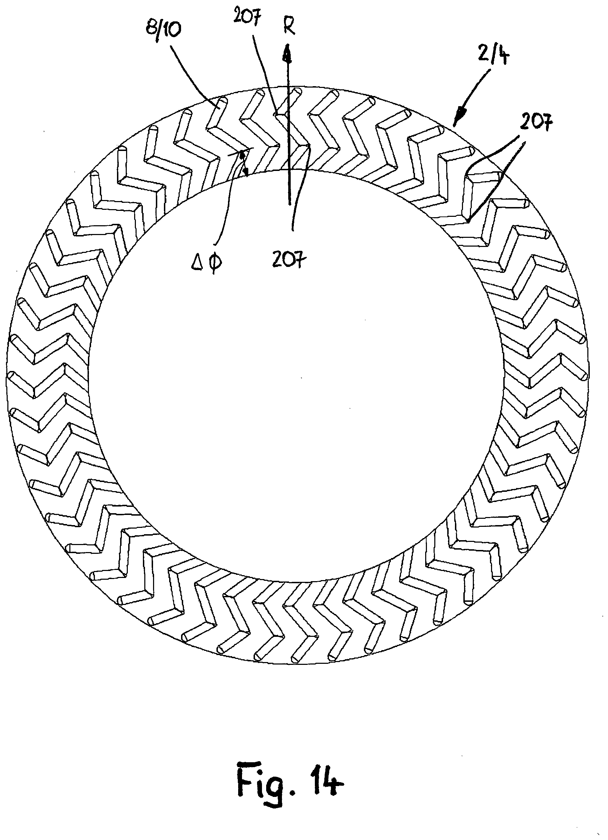

In Fig. 14 ist ebenfalls ein Kühlflansch 2, 4 mit wellenförmigen Kühlrippen 8, 10 mit konstanter Phasenlage dargestellt. Im Unterschied zu Fig. 12 hat die Welligkeitsfunktion der Kühlrippen 8, 10 eine andere Form. Während bei der Ausführungsform beispielsweise gemäß Fig. 10 im Bereich der Maximalausschläge 207 der Welligkeitsfunktion der Kühlrippen 8, 10 eine eher runde Kontur vorliegt und die Form der Welligkeitsfunktionen in ihrem Verlauf eher an eine Sinusfunktion angelehnt ist, weist Fig. 14 im Bereich der Maximalausschläge 207 der Welligkeitsfunktion der Kühlrippen 8, 10 eine eher spitze oder eckige Form auf. Der Verlauf ist eher zackenförmig. Die Kühlrippenmittellinie 8a, 10a einer wellenförmige Kühlrippe 8, 10 weist über ihren radialen Verlauf wechselnd Ausschläge in positive und negative Umfangsrichtung O gegenüber einer Referenzgerade R auf. Insbesondere hat die Welligkeitsfunktion mindestens zwei lokale Extrema (Maxima oder Minima). Der Verlauf der Welligkeitsfunktion kann dabei verschiedene Formen annehmen, bspw. aneinandergefügte Kegelschnittsegmente, Zackenform, Sägezahnform, Sinusform oder davon abgeleitete Formen, oder Stufenform.

Die Erfüllung eines ersten Kriteriums zu den Phasenlagen Δ Φ aller wellenförmigen Kühlrippen 8, 10 eines Kühlflansches 2, 4, insbesondere eines Wärme abführenden Kühlflansches 2, 4, gewährleistet eine ähnliche Kühlwirkung einer Kühlvorrichtung 205 für beide Drehrichtungen. Dieses Kriterium besagt, dass die dimensionslos im Bogenmaß ausgedrückten Phasenlagen Δ ϕ der Welligkeitsfunktionen aller Kühlrippen 8 bzw. 10 eines Kühlflansches 2,4 im Bereich von 0 bis 2*π etwa gleichmäßig verteilt sind. Würde man die Welligkeitsfunktionen aller Kühlrippen 8, 10 eines Kühlflansches 2 bzw. 4 mitteln, also sie zusammenaddieren und durch die Zahl der Kühlrippen n dividieren, so wäre das Ergebnis eine mittlere Welligkeitsfunktion mit vergleichsweise geringer Amplitude, weil Auslöschungseffekte überwiegen. Vorteilhaft ist der Betrag der Amplitude der gemittelten Welligkeitsfunktion nicht größer als 20% des Betrags der mittleren Amplitude Am aller Kühlrippen 8 bzw. 10.

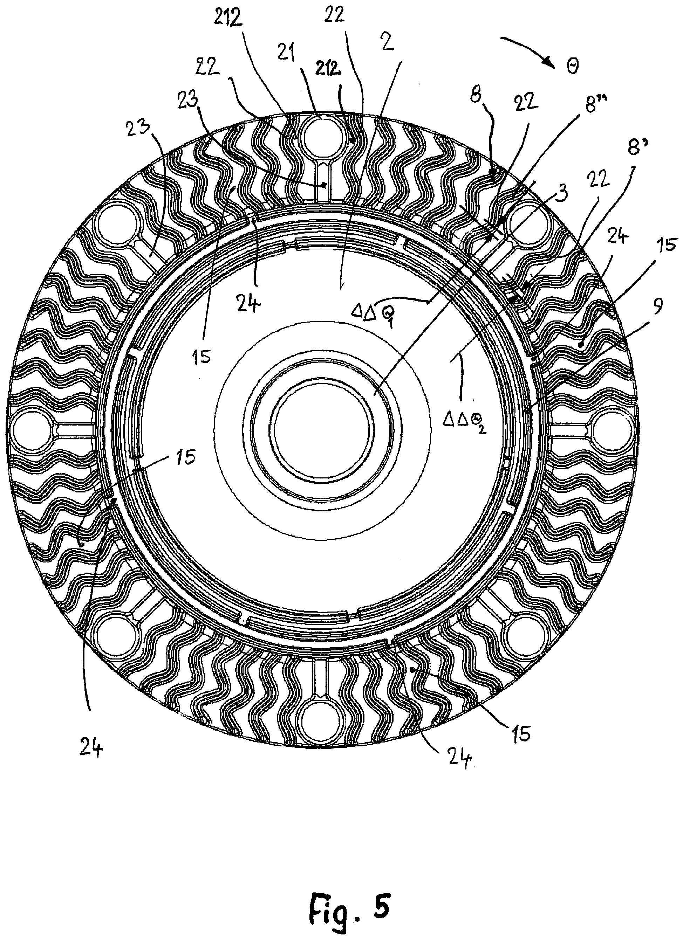

Eine erfindungsgemäße Konstruktionsmöglichkeit, die die Erfüllung dieses Kriteriums sicherstellt, ist es, dass jeder Kühlrippe 8 bzw. 10 durch Paarbildung genau eine andere Kühlrippe 8' bzw. 10' des gleichen Kühlflansches 2 bzw. 4 zugeordnet wird, welche etwa den gleichen radialen Amplitudenverlauf A und etwa den gleichen radialen Wellenlängenverlauf Λ aufweist und sich in ihrer Phasenlage Δϕ um etwa π von derjenigen der anderen Kühlrippe 8 bzw. 10 unterscheidet. In Fig. 1 und Fig. 5 ist beispielhaft jeweils ein Paar solcher Statorkühlrippen 8 und 8' bezeichnet.

Die Erfüllung eines zweiten Kriteriums zu den Phasenlagen ΔΦ aller wellenförmigen Kühlrippen 8, 10 eines Kühlflansches 2, 4, insbesondere eines Wärme abführenden Kühlflansches 2, 4, gewährleistet in Kombination mit der Erfüllung des ersten Kriteriums eine nahezu identische Kühlwirkung einer Kühlvorrichtung 205 für beide Drehrichtungen. Zur Erklärung wird für ein Paar direkt benachbarter Kühlrippen 8, 8" bzw. 10, 10" eine Phasenverschiebung ΔΔΦ betrachtet, welche den vorzeichenbehafteten Unterschied in der Phasenlage ΔΦ zwischen zwei benachbarten Kühlrippen darstellt: ΔΔΦ= Δ Φ 8" bzw. 10"- Δ Φ 8 bzw. 10. Dabei ist immer 8" bzw. 10" die in Drehrichtung Θ liegende benachbarte Kühlrippe von 8 bzw. 10. Die zweite Bedingung ist dann erfüllt, wenn die gemittelte vorzeichenbehaftete Phasenverschiebungen ΔΔΦ aller möglichen Paare benachbarter Kühlrippen 8,8" bzw. 10,10" eines Kühlflansches 2 bzw. 4 nahe null liegt, das bedeutet, dass positive und negative Phasenverschiebungen über den Umfang sich in etwa aufheben. Vorteilhaft ist diese mittlere Phasenverschiebung dimensionslos im Bogenmaß ausgedrückt betragsmäßig nicht größer als π/6.

Eine Konstruktionsmöglichkeit (nicht Teil der beanspruchten Erfindung), die die Erfüllung des zweiten Kriteriums sicherstellt, ist es, dass jeder Verschiebung ΔΔΦ (1) direkt benachbarter Kühlrippen genau ein anderes ΔΔΦ (2) zugeordnet wird, das betragsmäßig gleich ist und anderes Vorzeichen hat. Vorteilhaft haben die Welligkeitsfunktionen von den Kühlrippen der Verschiebung ΔΔΦ (1) geeignet paarweise verglichen mit Kühlrippen der Verschiebung ΔΔΦ (2) jeweils etwa gleichen Amplituden- und Wellenlängenverlauf und sind vorteilhaft etwa um Δϕ=π zueinander phasenverschoben.

In Fig. 5 sind beispielhaft zwei solche komplementäre Phasenverschiebungen ΔΔΦ (1) und ΔΔΦ (2) gekennzeichnet.

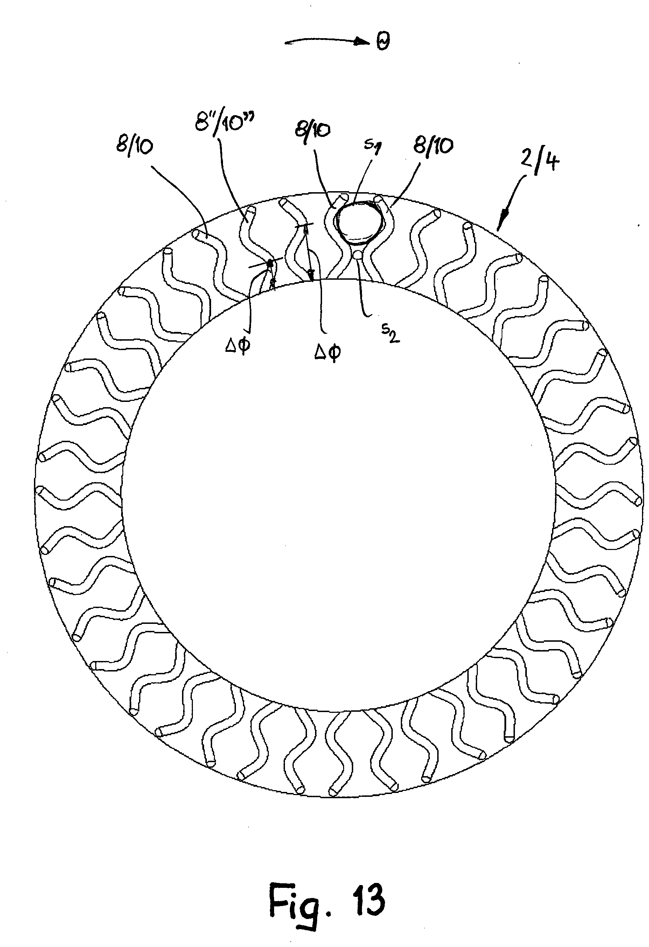

In Fig. 13 ist ein Kühlflansch 2, 4 mit wellenförmigen Kühlrippen 8, 10 dargestellt. Die Kühlrippen von Paaren 8,8" bzw. 10,10" haben, immer im Wechsel, dimensionslose Phasenverschiebungen ΔΔ ϕ von etwa +π und -π, also dimensionsbehaftete Phasenverschiebungen ΔΔ Φ von etwa einer halben Wellenlänge. Dieser Aufbau eines Kühlflanschs 2, 4 hinsichtlich der Phasenlage ΔΦ aller wellenförmigen Kühlrippen 8, 10 (inklusive 8", 10") führt zu einer im Wesentlichen drehrichtungsunabhängigen Kühlleistung des Kühlflanschs 2, 4, da insbesondere die beiden Bedingungen 1 und 2, die zuvor für die Erreichung von Drehrichtungsunabhängigkeit beschrieben wurden, erfüllt sind.

In Fig. 13 ist allerdings auch zu erkennen, dass der Kühlrippenabstand s zwischen zwei benachbarten Kühlrippen 8, 10 verhältnismäßig stark über die radiale Position variiert. Beispielhaft sind für zwei benachbarte Kühlrippen 8, 10 Kühlrippenabstände s1 und s2 an unterschiedlichen Stellen eingezeichnet. Diese haben stark unterschiedlichen Betrag. Es hat sich gezeigt, dass diese starke Variation des Kühlrippenabstandes in Radialrichtung eher nachteilig ist für die Kühlluftströmungsführung durch die Strömungskanäle, die jeweils durch den Zwischenraum zwischen zwei benachbarten Rippen ausgebildet sind, und somit die Kühlleistung vermindert sein kann.

Im Gegensatz dazu ist bei den erfindungsgemäßen Ausführungsformen gemäß den Figuren 1, 5, 7 zu erkennen, dass zwar eine Variation der Phasenlage ΔΦ zwischen den verschiedenen Kühlrippen 8 des Statorkühlflansches 2 vorliegt, um den beiden Kriterien zur Drehrichtungsunabhängigkeit der Kühlleistung zu genügen, allerdings dennoch die Abstände zwischen jeweils zwei benachbarten Kühlrippen 8 über den Radius weit weniger stark variieren als in Fig. 13. Dabei ist zu berücksichtigen, dass allein aufgrund der radialen Erweiterung des inneren Hüllkreises 13 zum äußeren Hüllkreis 14 eines Kühlflansches ohnehin schon mit einer Vergrößerung des Kühlrippenabstandes zu rechnen ist, der in diesem Maße allein nicht nachteilig ist. Um eine nicht zu starke radiale Variation des Kühlrippenabstandes von benachbarten Kühlrippen 8, 10 zu erreichen, ist erfindungsgemäß eine dem Betrage nach maximale Phasenverschiebung zwischen zwei benachbarten Kühlrippen von ΔΔϕ (max) =rrl3 vorgesehen. Diese Bedingung ist vorteilhaft für wenigstens 80% aller möglichen Paare direkt benachbarter Kühlrippen 8, 10 eines Kühlflanschs 2,4 einzuhalten, wobei es sich nicht schädlich auswirkt, wenn einige Paare (max. 20%) direkt benachbarter Kühlrippen 8, 10 dieser Bedingung nicht genügen.

Um im Betrieb des Motors noch niedrigere Drehtöne zu erhalten, kann es des Weiteren vorteilhaft sein, wenn die Kühlrippen 8, 10 über den Umfang leicht ungleichmäßig verteilt sind. Diese Ungleichmäßigverteilung wäre insbesondere in einer Ungleichmäßigverteilung der jeweiligen Referenzgeraden R zu erkennen. Als vorteilhaft hat sich ein Verhältnis zwischen dem größten auftretenden Winkelversatz zweier benachbarter Referenzgeraden R und dem kleinsten auftretenden Winkelversatz zweier benachbarter Referenzgeraden R von 1,2 bis 2 herausgestellt.

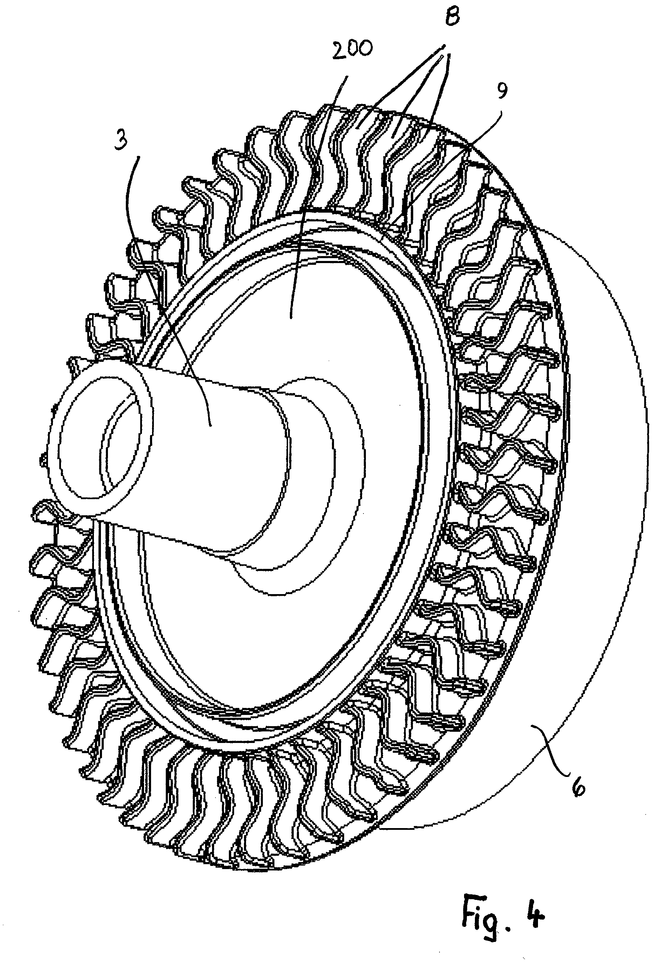

Die Kühlrippen 8, 10 sind vorteilhafterweise, in Achsrichtung gesehen, ohne Hinterschnitt gestaltet. Dadurch ist es möglich, den Kühlflansch 2, 4 mit den Kühlrippen 8, 10 sehr einfach im Druckgussverfahren herzustellen und zu entformen. Insbesondere lässt sich eine gesamte Statorbuchse gemäß einer der Figuren 1 bis 8 mit Statorkühlflansch 2 integriert in Statorflansch 200, Lagerbuchse 3, Wand 6 und Kühlrippen 8 im Druckgussverfahren kostengünstig herstellen.

Die Ausführungsform gemäß Fig. 3 unterscheidet sich vom Ausführungsbeispiel gemäß Fig. 2 insbesondere dadurch, dass auf den Kühlrippen 10 des Rotorkühlflansches 4 eine flache Trennscheibe 16 angeordnet ist, die die Kühlrippen 10 über den größten Teil ihrer radialen Erstreckung abdeckt. Die ringscheibenförmige Trennscheibe 16 liegt mit Abstand den Kühlrippen 8 des Statorkühlflansches 2 gegenüber. Der radial innere Rand 17 der Trennscheibe 16 hat Abstand zum Ringvorsprung 12. Dadurch wird ein Lufteinlass 18 zwischen dem Ringvorsprung 12 und dem inneren Rand 17 der Trennscheibe 16 gebildet.

Die Trennscheibe 16 ist im Ausführungsbeispiel so vorgesehen, dass ihre den Kühlrippen 8 des Statorkühlflansches 2 zugewandte ebene Außenseite 19 in einer gemeinsamen Radialebene mit der Stirnseite 20 des Ringvorsprunges 12 liegt. Auf diese Weise ist eine optimale Strömungsführung für die Kühlluft gewährleistet. Die Trennscheibe 16 sorgt dafür, dass zwischen den Kühlrippen 8 und 10 ein geführter Kühlluftstrom erzeugt wird. Die durch den rotierenden Rotorkühlflansch 4 angesaugte Kühlluft strömt zwischen den Kühlrippen 8 radial von außen nach innen in den Strömungskanälen 15 und gelangt von hier in den Lufteinlass 18, so dass die Kühlluft anschließend zwischen den Kühlrippen 10 des Rotorkühlflansches 4 radial von innen nach außen strömt.

Der Ringvorsprung 9 des Statorkühlflansches 2 schließt derart an den Ringvorsprung 12 des Rotorkühlflansches 4 an, dass die Kühlluft am Ringvorsprung 9 axial so umgelenkt wird, dass sie durch den Lufteinlass 18 zu den Kühlrippen 10 gelangt. Da die Trennscheibe 16 die zwischen den Kühlrippen 10 befindlichen Strömungskanäle 15 in Richtung auf die Kühlrippen 8 abschließt, wird eine hervorragende Luftführung durch die Kühlvorrichtung 205 sichergestellt.

Im Übrigen ist die Ausführungsform gemäß Fig. 3 vergleichbar ausgebildet wie die Ausführungsform gemäß den Fig. 1 und 2.

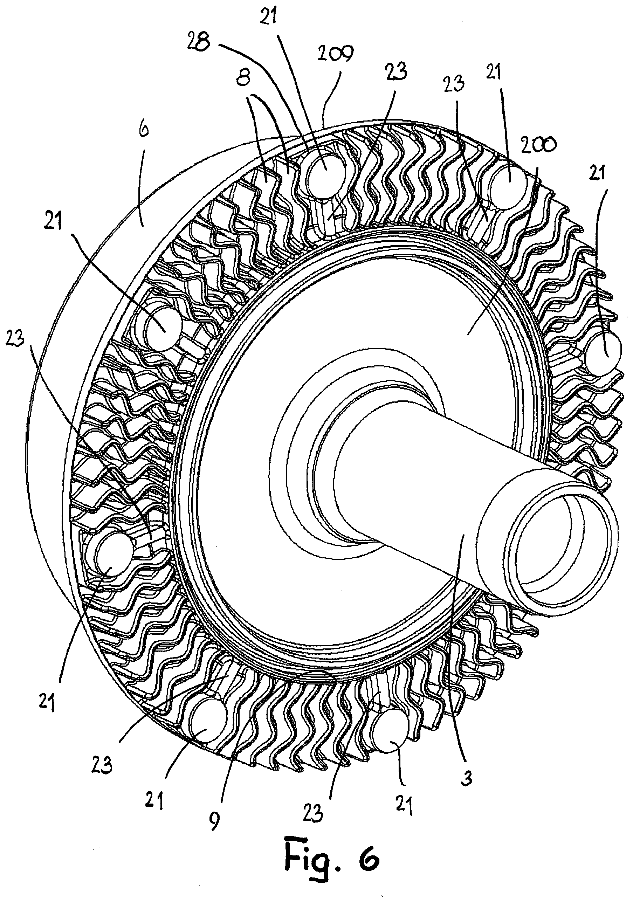

Bei der Ausführungsform gemäß den Fig. 5 und 6 sind die Kühlrippen 8 länger als bei den vorigen Ausführungsbeispielen. Insbesondere ist die radiale Erstreckung B relativ groß und hat einen Wert von etwa 40% des inneren Radius Ri des Kühlflansches 2. Das Verhältnis von Wellenlänge Λ der Kühlrippen 8 zur radialen Erstreckung B ist im Vergleich zum Ausführungsbeispiel nach Fig. 1 kleiner und beträgt etwa 60%.

Auch bei dieser Ausführungsform haben benachbarte Kühlrippen 8 unterschiedliche Phasenlagen ΔΦ bzw. dimensionslos im Bogenmaß ausgedrückt Δϕ.

Im Bereich zwischen einigen Kühlrippen 8 sind Dome 21 vorgesehen, die am Statorkühlflansch 2 integriert sind und zur Befestigung des Stators an einer Aufhängung dienen. Diese wird mit Schrauben am Stator befestigt, welche in die Dome 21 in bekannter Weise von der der Wand 6 zugewandten Seite 209 (siehe Fig. 6) des Statorflansches 2 aus geschraubt werden können.

Damit der Bereich um die Dome 21 optimal mit den Kühlrippen 8 und dazwischen ausgebildeten Strömungsbereichen ausgenutzt werden kann, sind die Dome 21 so angeordnet und die Kühlrippen 8 benachbart zu den Domen 21 so geformt, dass die Wellenabschnitte 22 der benachbarten Kühlrippen 8 an die Umrissform der Dome 21 angepasst sind. Da die Dome 21 im Ausführungsbeispiel kreisförmigen Querschnitt haben, sind die Wellenabschnitte 22 zumindest annähernd so ausgebildet, dass sie etwa koaxial zum Mantel der Dome 21 verlaufen. Dadurch wird ein nötiger bzw. für die Kühlung optimaler Abstand zwischen den benachbarten Rippen 8 und den Domen 21 gewährleistet, d.h. zwischen den Domen und den benachbarten Kühlrippen 8 wird ein wirksamer Strömungskanal 212 (Fig. 5) ausgebildet.

Im Ausführungsbeispiel gemäß Fig. 5, 6 variiert die rippengemittelte Amplitude Amr der einzelnen Kühlrippen 8 über den Umfang. Im Bereich der Dome 21 ist diese mittlere Kühlrippenamplitude Amr eher kleiner und so gewählt, dass zwischen den Domen 21 und der jeweils benachbarten Rippe ein günstiger Strömungskanal 212 ausgebildet ist. Für Kühlrippen 8 in einem Zwischenbereich entfernt von den Domen 21 ist diese mittlere Kühlrippenamplitude eher größer gewählt, insbesondere um größere, die Wärme abstrahlende Oberflächen zu erhalten. Das Verhältnis von größter zu kleinster mittlerer Kühlrippenamplitude Amr liegt etwa im Bereich 1.2..2. Das Verhältnis der mittleren Kühlrippenamplitude Amr direkt benachbarter Kühlrippen sollte vorteilhaft nicht höher als 1.1 gewählt werden, um die Ausbildung günstiger Strömungskanäle zu gewährleisten.

Außerdem ist die Phasenverschiebung ΔΔΦ zwischen den benachbarten Kühlrippen 8 so gestaltet, dass ein optimaler Übergang zu den benachbarten Domen 21 erreicht wird. Auf diese Weise ist trotz der Dome 21 gewährleistet, dass die Kühlwirkung unabhängig von der Drehrichtung des (nicht dargestellten) Rotorkühlflansches 4 ist.

Infolge der beschriebenen Gestaltung dienen auch die Außenseiten der Dome 21 im Zusammenspiel mit den Wellenabschnitten 22 der zu ihnen benachbarten Kühlrippen 8 zur Strömungsführung und zur Wärmeabgabe.

Die Dome 21 sind über einen radial verlaufenden Steg 23 an den Ringvorsprung 9 angebunden. Die Stege 23 erstrecken sich von der Grundfläche des Statorkühlflansches 2 aus etwa in Achsrichtung des Statorkühlflansches. Vorteilhaft haben die Stege 23 etwa die gleiche Höhe wie die Dome 21 und die Kühlrippen 8.

Auch die Dome 21 und die Stege 23 sind ohne Hinterschnitt ausgebildet, so dass die Entformung der kompletten Statorbuchse 1 problemlos möglich ist.

Der Ringvorsprung 9 ist im Unterschied zu den vorigen Ausführungsbeispielen nicht als durchgehender Ring ausgebildet, sondern durch axial verlaufende Schlitze 24 in einzelne Segmente unterteilt. Diese Schlitze 24 sind so vorgesehen, dass sie im Bereich der entsprechenden Strömungskanäle 15 zwischen benachbarten Kühlrippen liegen.

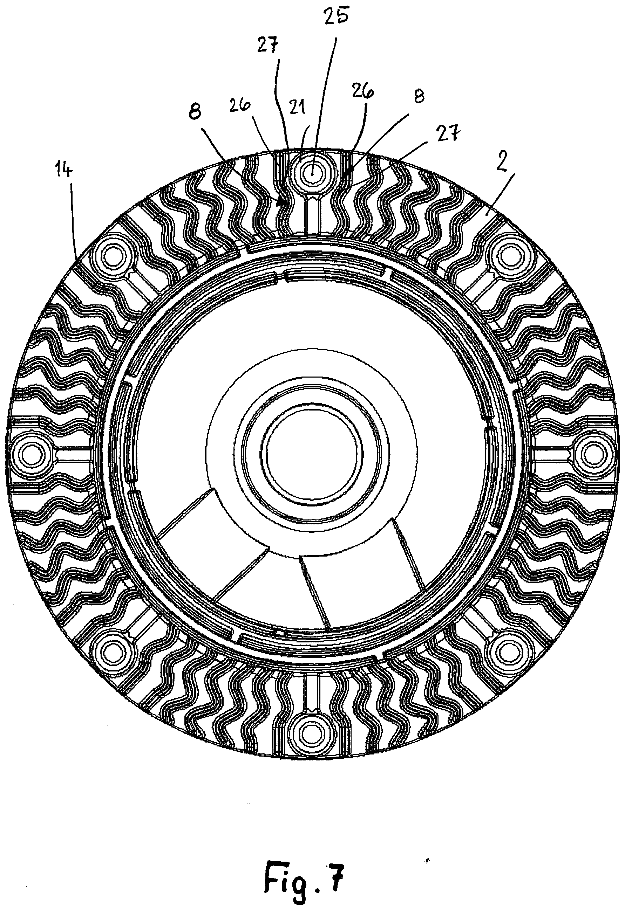

Die axialen Schlitze 24 liegen im Bereich zwischen benachbarten Domen 21, in Achsansicht gesehen (Fig. 5). Die Dome 21 umschließen in bekannter Weise den Statorflansch 2 durchsetzende Öffnungen 25 (Fig. 7), in welche vorteilhaft Gewinde eingebracht werden, in welche die Schrauben zur Verbindung des Stators mit der Aufhängung eingeschraubt werden können.

Die Phasenlage ΔΦ variiert in der beschriebenen Weise über den Umfang des Statorflansches 2, wodurch erreicht wird, dass die Kühlung der Kühlrippen 8, 10 unabhängig von der Drehrichtung des Rotorkühlflansches 4 ist. Da die Kühlrippen 8 die Wellenform haben, ist auch der Drehton, der bei der Kühlvorrichtung 205 im Betrieb des Motors auftritt, im Vergleich zu gerade verlaufenden Kühlrippen an beiden Kühlflanschen 2 und 4 erheblich reduziert.

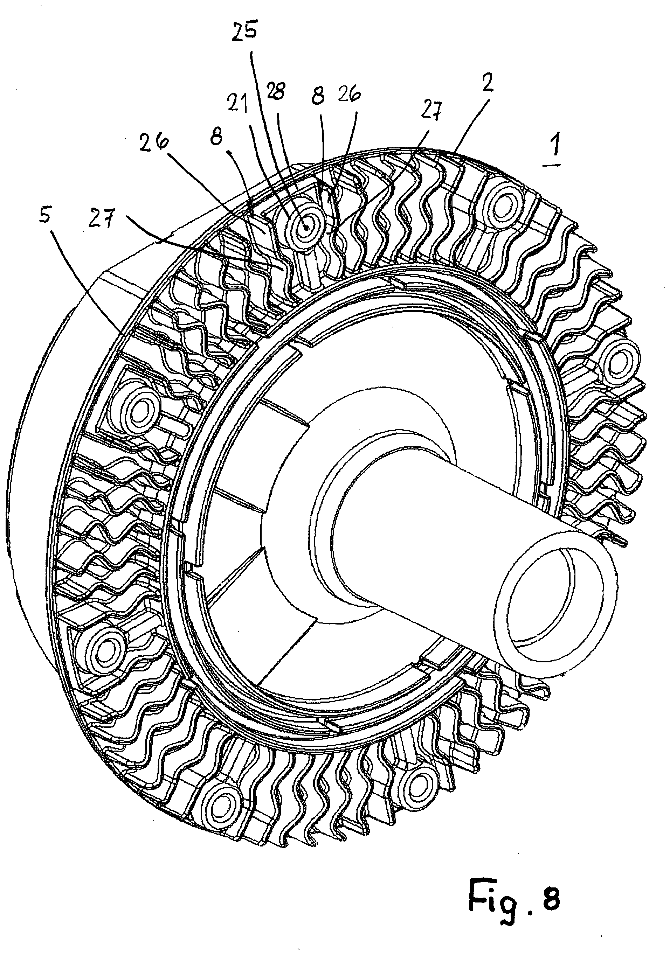

Die Fig. 7 und 8 zeigen eine Ausführungsform, die im Wesentlichen dem Ausführungsbeispiel gemäß den Fig. 5 und 6 entspricht. Darum wird im Folgenden nur die unterschiedliche Gestaltung beschrieben. Sie liegt darin, dass die benachbart zu den Domen 21 liegenden Kühlrippen 8 so ausgebildet sind, dass nicht mehr die gekrümmten Wellenabschnitte 22 koaxial zu den Domen liegen, sondern dass die Kühlrippen 8 mit geraden und zueinander parallelen Abschnitten 26 neben den Domen 21 verlaufen. Die geraden Abschnitte 26 erstrecken sich vom äußeren Hüllkreis 14 aus so radial nach innen, dass sie bis nahe an den Dom 21 reichen. Die geraden Abschnitte 22 gehen dann in gekrümmte Wellenabschnitte 27 über, die etwa koaxial zu den jeweiligen Domen 21 verlaufen. Durch diese Gestaltung der beiden benachbart zu den jeweiligen Domen 21 liegenden Kühlrippen 8 wird ermöglicht, die Statorbuchse 1 bei der Fertigung mit einer entsprechenden Greifvorrichtung greifen zu können. Eine entsprechende Greifvorrichtung kann von seitlich zwischen die geraden und radial ausgerichteten Kühlrippenbereiche 26 eingreifen.

Wie aus den Ausführungsbeispielen gemäß Fig. 6 und Fig. 8 hervorgeht, ist in einem Bereich 28 zwischen zwei den Domen 21 benachbarten Kühlrippen 8 die tragende Wandung des Kühlflansches 2 mit größerer Wandstärke ausgeführt. Dadurch können die infolge der an den Domen 21 befestigten Aufhängung auftretenden Bauteilspannungen reduziert werden.

Die übrigen Kühlrippen 8 sind in der beschriebenen Weise ausgebildet und angeordnet.

Bei der dargestellten Ausführungsform gemäß den Fig. 7 und 8 sind über den Umfang der Statorbuchse 1 sechsundfünfzig wellige Kühlrippen 8 verteilt angeordnet. Diese Kühlrippen 8 haben vorteilhaft eine mittlere Dicke von etwa 1,5 bis 2,5 mm. Durch die wellig ausgebildeten Kühlrippen 8 wird eine große, die Wärme abführende Fläche geschaffen, ohne den Abstand zwischen benachbarten Kühlrippen 8 zu klein werden zu lassen. Dieser Abstand zwischen benachbarten Kühlrippen beträgt im Mittel sm über einen Kühlflansch mindestens die einfache mittlere Rippendicke dm über den Kühlflansch. Vorteilhaft liegt dieser mittlere Abstand sm zwischen benachbarten Kühlrippen 8 in einem Bereich zwischen dem Zwei- und dem Sechs-fachen der mittleren Rippendicke dm. In der Praxis beträgt dieser mittlere Abstand sm vorteilhaft etwa 3 bis 18 mm.

Der äußere Radius Ra (Fig. 9) wird bei beim Einsatz des Motors mit Axialventilatorlaufrädern vorteilhaft nicht zu groß gewählt, da bei Axialventilatoren ein Kühlflansch 2, 4 ein Hindernis für die Luftströmung des Axialventilators darstellen kann. Der innere Radius Ri ist in der Regel durch die Konstruktion übriger Komponenten des Motors bestimmt. Das Verhältnis des Außendurchmessers Ra zum Innendurchmesser Ri des Flanschbereiches 29 liegt vorteilhaft in einem Bereich von etwa 1,1 bis 1,6, vorzugsweise bei etwa 1,4. Die radiale Erstreckung B eines Kühlflanschs wird durch Ra und Ri bestimmt.

Wie die schematische Darstellung gemäß Fig. 9 zeigt, erstreckt sich die wellenförmige Kühlrippe 8 zwischen dem Außenradius Ra und dem Innenradius Ri des Kühlflansches 2, 4. Der Außendurchmesser Ra entspricht dem Radius des äußeren Hüllkreises 14 und der Innenradius Ri dem Radius des inneren Hüllkreis 13 (Fig. 1 und 7). Die Kühlrippe 8 ist hierbei so angeordnet, dass sie im Wesentlichen in Radialrichtung ausgerichtet ist. Die Umfangsrichtung des Flanschbereiches 29 ist mit Θ bezeichnet. Mit M ist die Drehachse des Rotors gekennzeichnet.

Die Fig. 11a bis 11d zeigen unterschiedliche Ausbildungen der Kühlrippen 8, 10 in einem Querschnitt etwa senkrecht zu einer gedachten Kühlrippenmittellinie 8a, 10a.

Bei der Ausführungsform gemäß Fig. 11a hat die Kühlrippe 8, 10 rechteckigen Querschnitt mit der Dicke d. Die Kühlrippe 8, 10 weist über ihre Höhe H entsprechend konstanten Querschnitt bzw. konstante Dicke d auf. Das Verhältnis Hld liegt vorteilhaft im Bereich zwischen etwa 2 und 8. Die Dicke d beträgt vorteilhaft etwa 1 mm bis 4 mm.

Die Kühlrippe 8, 10 gemäß Fig. 11b hat trapezförmigen Querschnitt. Im Fußbereich hat die Kühlrippe 8,10 die Dicke d1 und im Kopfbereich die Dicke d2, die kleiner ist als die Dicke d1. Der Übergang von der Kopfseite 30 zu den Seitenwänden 31, 32 der Kühlrippe 8, 10 ist abgerundet. Aufgrund des trapezförmigen Querschnittes verjüngt sich die Kühlrippe 8, 10 vom Fußbereich aus bis zum Kopfbereich bzw. Kopfseite 30 stetig, d.h. die Dicke d variiert vom Kopfbereich zum Fußbereich. Das Verhältnis Hld liegt auch bei einer solchen Gestaltung der Kühlrippe 8, 10 über die gesamte Höhe der Kühlrippe 8, 10 vorteilhaft im Bereich zwischen etwa 2 und 8.

Die Kühlrippe 8, 10 gemäß Fig. 11c hat prinzipiell die gleiche Ausbildung wie die Kühlrippe gemäß Fig. 11b. Der Unterschied besteht lediglich darin, dass die Kopfseite 30 jeweils über eine Kante in die Seitenwände 31, 32 übergeht und nicht verrundet ist.

Die schräg liegenden Seitenwände 31, 32 der Kühlrippen 8, 10 gemäß den Fig. 11b und 11c sind vorteilhaft für den Wärmefluss, da eine kontinuierliche Querschnittsverjüngung der Rippen in Hauptflussrichtung der Wärme vom Bereich der Basisfläche 33 zum Kopfbereich 30 vorliegt. Insbesondere aber hat diese Querschnittsgestaltung den Vorteil, dass sich der Kühlflansch 2, 4 problemlos aus einem Gusswerkzeug entformen lässt. Die Seitenwände 31, 32 bilden Entformungsschrägen.

Die Kühlrippe 8, 10 gemäß Fig. 11d zeichnet sich dadurch aus, dass die Kopfseite 30 nicht eben ausgebildet ist wie bei den Ausführungsformen gemäß den Fig. 11b und 11c, sondern voll verrundet.

Bei sämtlichen Ausführungsformen gemäß den Fig. 11a bis 11d können Abrundungen auch am Übergang von den Seitenwänden 31, 32 zur Basisfläche 33 vorgesehen sein.

Die stirnseitigen und die basisseitigen Abrundungen können auch bei der Kühlrippe 8, 10 gemäß Fig. 11a mit dem rechteckförmigen Querschnitt vorgesehen sein.

Bei sämtlichen beschriebenen Ausführungsformen können die wellenförmigen Kühlrippen 8, 10 nur an einem der Kühlflansche 2, 4 vorgesehen sein, vorteilhaft an einem die Wärme abgebenden Kühlflansch 2, 4. Die Kühlrippen 8, 10 des anderen Kühlflansches 2, 4 können hierbei in herkömmlicher Weise gerade verlaufend ausgebildet sein, wobei diese geraden Kühlrippen 8, 10 radial verlaufend oder auch unter einem Winkel zur Radialen verlaufend vorgesehen sein können.

Ebenso ist es möglich, die wellenförmigen Kühlrippen nicht nur an einem Kühlflansch 2, 4, sondern auch an beiden Kühlflanschen 2, 4 vorzusehen. Dabei können die welligen Kühlrippen 8, 10 der beiden Kühlflansche 8, 10 unterschiedliche charakteristische Größen aufweisen (beispielsweise Ra, Ri, B, Λ, ΔΦ, A)

Ein Kühlflansch 2, 4 kann auch dann vorteilhaft mit wellenförmigen Kühlrippen 8, 10 gestaltet werden, wenn nicht alle Kühlrippen 8, 10 Wellenform aufweisen. Mindestens 50% aller Kühlrippen 8, 10 eines Kühlflansches 2, 4 weisen Wellenform auf, besser 80% aller Kühlrippen 8, 10 eines Kühlflansches 2, 4.

## Patentansprüche

1. Kühlvorrichtung eines Elektromotors, mit einem Rotorkühlflansch (4) und einem Statorkühlflansch (2), von denen einer gegenüber dem anderen drehbar und wenigstens einer der beiden Kühlflansche (2, 4) mit über seinen Umfang verteilt angeordneten, in radialer Richtung verlaufenden Kühlrippen (8, 10) versehen ist, von denen zumindest 50% der besagten Kühlrippen (8, 10) des wärmeabgebenden Kühlflansches (2, 4) eine Oberfläche haben, die größer ist als die Oberfläche der zugehörigen, in Radialrichtung verlaufenden geraden Referenzrippe, wobei zumindest einer der beiden Kühlflansche (2, 4) im Betrieb des Elektromotors Wärme an die Umgebungsluft abgibt, **dadurch gekennzeichnet, dass** die zumindest 50% der Kühlrippen (8, 10) über ihre Länge einen wellenförmigen Verlauf haben, dass die Phasenlage (ΔΦ) der wellenförmigen Kühlrippen (8, 10) zumindest einer der beiden Kühlflansche (2, 4) unterschiedlich ist, dass jeder Kühlrippe (8, 10) durch Paarbildung genau eine andere Kühlrippe (8', 10') des gleichen Kühlflansches (2, 4) zugeordnet wird, welche etwa den gleichen radialen Amplitudenverlauf (A) und etwa den gleichen radialen Wellenlängenverlauf (Λ) aufweist und sich in ihrer Phasenlage (Δϕ) um etwa π von derjenigen der anderen Kühlrippe (8, 10) unterscheidet, dass die Referenzrippe, deren gedachte Kühlrippenmittellinie genau auf einer Referenzgeraden (R) liegt, welche die Kühlrippenmittellinie (8a, 10a) der zugehörigen wellenförmigen Kühlrippe (8, 10) wenigstens dreimal schneidet, die gleiche axiale und radiale Erstreckung wie die zugehörige wellenförmige Kühlrippe (8, 10) sowie den gleichen Dickenverlauf hat, und dass dem Betrage nach die maximale Phasenverschiebung zwischen zwei benachbarten Kühlrippen für mindestens 80% aller möglichen direkt benachbarter Kühlrippen des Kühlflansches (2, 4) ΔΔϕ (max.) = π/3 beträgt.

2. Kühlvorrichtung nach Anspruch 1,
**dadurch gekennzeichnet, dass** das Verhältnis (sm/dm) des mittleren Abstands (sm) von jeweils zwei benachbarten Kühlrippen (8, 10) zu der mittleren Dicke (dm) der Kühlrippen (8, 10) einen Betrag im Bereich zwischen 2 und 6 einnimmt.

3. Kühlvorrichtung nach Anspruch 1 oder 2,
**dadurch gekennzeichnet, dass** die mittlere Dicke (dm) aller Kühlrippen (8, 10) eines Kühlflanschs (2, 4) mit Wärme abgebender Funktion zwischen etwa 1,5 bis etwa 3 mm liegt.

4. Kühlvorrichtung nach einem der Ansprüche 1 bis 3,
**dadurch gekennzeichnet, dass** die mittlere Dicke (dm) aller Kühlrippen (8, 10) eines Kühlflanschs (2, 4) ohne Wärme abgebender Funktion zwischen etwa 0,5 bis etwa 1,5 mm liegt

5. Kühlvorrichtung nach einem der Ansprüche 1 bis 4,
**dadurch gekennzeichnet, dass** die beiden Enden der Kühlrippen (8, 10) radial in einem Bereich zwischen einem inneren und einem äußeren Hüllkreis (13, 14) liegen.

6. Kühlvorrichtung nach Anspruch 5,
**dadurch gekennzeichnet, dass** das Verhältnis der Radien (Ra und Ri) von einem äußeren Hüllkreis (14) und von einem inneren Hüllkreis (13) zwischen etwa 1,1 und etwa 1,6 liegt.

7. Kühlvorrichtung nach einem der Ansprüche 1 bis 6,
**dadurch gekennzeichnet, dass** die Kühlrippen (8, 10) über ihre Höhe (H) konstante Dicke (d) haben.

8. Kühlvorrichtung nach einem der Ansprüche 1 bis 7,
**dadurch gekennzeichnet, dass** die Dicke (d) der Kühlrippen (8, 10) in Richtung auf ihre Stirnseite (30) abnimmt.

9. Elektromotor mit einer Kühlvorrichtung nach einem der Ansprüche 1 bis 8.

## Claims

1. Cooling device of an electric motor, having a rotor cooling flange (4) and a stator cooling flange (2), of which one is rotatable with respect to the other and at least one of the two cooling flanges (2, 4) is provided with cooling fins (8, 10), which are arranged in a distributed manner over the circumference of the cooling flange and run in the radial direction, at least 50% of the said cooling fins (8, 10) of the heat-emitting cooling flange (2, 4) having a surface area which is larger than the surface area of the associated straight reference fin, which runs in the radial direction, at least one of the two cooling flanges (2, 4) emitting heat to the ambient air during operation of the electric motor,
**characterized in that** the at least 50% of the cooling fins (8, 10) have a wave-like shape over their length, **in that** the phase position (ΔΦ) of the wave-like cooling fins (8, 10) of at least one of the two cooling flanges (2, 4) is different, **in that** precisely one other cooling fin (8', 10') of the same cooling flange (2, 4) is assigned to each cooling fin (8, 10) by pairing, which other cooling fin has approximately the same radial amplitude progression (A) and approximately the same radial wavelength progression (Λ) and differs in terms of its phase position (Δϕ) by approximately π from that of the other cooling fin (8, 10), **in that** the reference fin - the imaginary cooling-fin centre line of which lies exactly on a reference straight line (R) which intersects the cooling-fin centre line (8a, 10a) of the associated wave-like cooling fin (8, 10) at least three times - has the same axial and radial extent as the associated wave-like cooling fin (8, 10) and the same thickness progression, and **in that** the value after the maximum phase shift between two adjacent cooling fins for at least 80% of all possible directly adjacent cooling fins of the cooling flange (2, 4) is ΔΔϕ (max.) = π/3.

2. Cooling device according to Claim 1,
**characterized in that** the ratio (sm/dm) of the average spacing (sm) of in each case two adjacent cooling fins (8, 10) to the average thickness (dm) of the cooling fins (8, 10) has a value in the range between 2 and 6.

3. Cooling device according to Claim 1 or 2,
**characterized in that** the average thickness (dm) of all of the cooling fins (8, 10) of a cooling flange (2, 4) with a heat-emitting function lies between approximately 1.5 and approximately 3 mm.

4. Cooling device according to one of Claims 1 to 3,
**characterized in that** the average thickness (dm) of all of the cooling fins (8, 10) of a cooling flange (2, 4) without a heat-emitting function lies between approximately 0.5 and approximately 1.5 mm.

5. Cooling device according to one of Claims 1 to 4,
**characterized in that** the two ends of the cooling fins (8, 10) lie radially in a region between an inner and an outer enveloping circle (13, 14).

6. Cooling device according to Claim 5,
**characterized in that** the ratio of the radii (Ra and Ri) of an outer enveloping circle (14) and an inner enveloping circle (13) lies between approximately 1.1 and approximately 1.6.

7. Cooling device according to one of Claims 1 to 6,
**characterized in that** the cooling fins (8, 10) have a constant thickness (d) over their height (H).

8. Cooling device according to one of Claims 1 to 7,
**characterized in that** the thickness (d) of the cooling fins (8, 10) decreases in the direction of their front side (30).

9. Electric motor having a cooling device according to one of Claims 1 to 8.

## Revendications

1. Dispositif de refroidissement pour un moteur électrique, comportant une bride de refroidissement du rotor (4) et une bride de refroidissement du stator (2), dont l'une peut tourner par rapport à l'autre et au moins une des deux brides de refroidissement (2, 4) est pourvue de nervures de refroidissement (8,10) réparties sur sa circonférence et s'étendant dans une direction radiale, desquelles au moins 50 % desdites nervures de refroidissement (8, 10) de la bride de refroidissement dégageant de la chaleur (2, 4) ont une surface, qui est plus grande que la surface de la nervure droite de référence associée s'étendant dans la direction radiale, dans lequel au moins une des deux brides de refroidissement (2, 4) dégage de la chaleur à l'air ambiant lors du fonctionnement du moteur électrique, **caractérisé en ce qu'**au moins 50% des nervures de refroidissement (8, 10) présentent sur leur longueur une forme ondulée, que la position de phase (ΔΦ) des nervures de refroidissement ondulées (8, 10) est différente d'au moins une des deux brides de refroidissement (2, 4), que chaque nervure de refroidissement (8, 10) est associée par formation de paire exactement à une autre nervure de refroidissement (8', 10') de la même bride de refroidissement (2, 4), qui présente à peu près la même courbe d'amplitude radiale (A) et à peu près la même courbe de longueur d'onde radiale (Λ) et se distingue dans sa position de phase (Δϕ) à peu près de TT par rapport à celle de l'autre nervure de refroidissement (8, 10), que la nervure de référence, dont la ligne médiane imaginaire de la nervure de refroidissement se trouve exactement sur une droite de référence (R), qui coupe la ligne médiane de la nervure de refroidissement (8a, 10a) de la nervure de refroidissement ondulée associée (8, 10) au moins trois fois, a la même extension axiale et radiale que la nervure de refroidissement ondulée associée (8, 10) ainsi que le même profil d'épaisseur, et que la valeur du déphasage maximal entre deux nervures de refroidissement adjacentes pour au moins 80 % de toutes les nervures de refroidissement directement adjacentes éventuelles de la bride de refroidissement s'élève à (2, 4) ΔΔϕ (max.) = π/3.

2. Dispositif de refroidissement selon la revendication 1,
**caractérisé en ce que** le rapport (sm/dm) de l'écart moyen (sm) entre deux nervures de refroidissement adjacentes (8, 10) et l'épaisseur moyenne (dm) des nervures de refroidissement (8, 10) est une valeur comprise entre 2 et 6.

3. Dispositif de refroidissement selon la revendication 1 ou 2, **caractérisé en ce que** l'épaisseur moyenne (dm) de toutes les nervures de refroidissement (8, 10) d'une bride de refroidissement (2, 4) ayant une fonction de dégagement de chaleur est comprise entre environ 1,5 et environ 3 mm.

4. Dispositif de refroidissement selon une des revendications 1 à 3,
**caractérisé en ce que** l'épaisseur moyenne (dm) de toutes les nervures de refroidissement (8, 10) d'une bride de refroidissement (2, 4) sans fonction de dégagement de chaleur est comprise entre environ 0,5 mm et environ 1,5 mm.

5. Dispositif de refroidissement selon une des revendications 1 à 4,
**caractérisé en ce que** les deux extrémités des nervures de refroidissement (8, 10) se situent radialement dans une région comprise entre un cercle périphérique intérieur et extérieur (13, 14).

6. Dispositif de refroidissement selon la revendication 5,
**caractérisé en ce que** le rapport des rayons (Ra, Ri) d'un cercle périphérique extérieur (14) et d'un cercle périphérique intérieur (13) est compris entre environ 1,1 et environ 1,6.

7. Dispositif de refroidissement selon une des revendications 1 à 6,
**caractérisé en ce que** les nervures de refroidissement (8, 10) ont une épaisseur (d) constante sur leur hauteur (H).

8. Dispositif de refroidissement selon une des revendications 1 à 7,
**caractérisé en ce que** l'épaisseur (d) des nervures de refroidissement (8, 10) diminue dans la direction de leur côté frontal (30).

9. Moteur électrique comportant un dispositif de refroidissement selon une des revendications 1 à 8.
